(19) Europäisches Patentamt
European Patent Office
Office européen des brevets

(11) **EP 3 298 300 B1**

(12) **EUROPÄISCHE PATENTSCHRIFT**

(45) Veröffentlichungstag und Bekanntmachung des Hinweises auf die Patenterteilung:
**14.09.2022 Patentblatt 2022/37**

(21) Anmeldenummer: **16727965.2**

(22) Anmeldetag: **18.05.2016**

(51) Internationale Patentklassifikation (IPC):
**F16F 15/00** *(2006.01)*

(52) Gemeinsame Patentklassifikation (CPC):
**F16F 15/002;** F16F 9/3292; F16F 9/535

(86) Internationale Anmeldenummer:
**PCT/EP2016/061133**

(87) Internationale Veröffentlichungsnummer:
**WO 2016/184910 (24.11.2016 Gazette 2016/47)**

(54) **VERFAHREN ZUR STEUERUNG EINER DÄMPFEREINRICHTUNG**

METHOD FOR CONTROLLING A DAMPER DEVICE

PROCÉDÉ DE COMMANDE POUR UN DISPOSITIF AMORTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015 DE 102015107734**

(43) Veröffentlichungstag der Anmeldung:
**28.03.2018 Patentblatt 2018/13**

(73) Patentinhaber: **Inventus Engineering GmbH**
**6771 St. Anton i. M. (AT)**

(72) Erfinder:
• **MAYER, Markus**
**6832 Sulz (Vorarlberg) (AT)**
• **PÖSEL, Jürgen**
**6700 Bludenz (AT)**
• **ELSENSOHN, Gernot**
**6771 St. Anton i. M. (AT)**
• **BATTLOGG, Stefan**
**6771 St. Anton i.M. (AT)**

(74) Vertreter: **BSB Patentanwälte**
**Schütte & Engelen Partnerschaft mbB**
**Am Markt 10**
**59302 Oelde (DE)**

(56) Entgegenhaltungen:
**EP-A2- 2 036 746    DE-A1-102012 012 535**

• **O'haver: "Intro. to Signal Processing:Smoothing", , 31. Januar 2012 (2012-01-31), XP055308811, Gefunden im Internet: URL:http://terpconnect.umd.edu/~toh/spectrum/Smoothing.html [gefunden am 2016-10-10]**

**Beschreibung**

Die vorliegende Erfindung betrifft ein Verfahren zur Steuerung einer Dämpfereinrichtung. Dabei weist die Dämpfereinrichtung zwei relativ zueinander bewegbare Anschlusseinheiten auf, zwischen denen zur Dämpfung von Relativbewegungen wenigstens ein steuerbarer Dämpfer vorgesehen ist, wobei der Dämpfer wenigstens eine erste Dämpferkammer und wenigstens ein zugeordnetes Dämpfungsventil aufweist. Das Dämpfungsventil weist einen Dämpfungskanal mit einem magnetorheologischen Fluid auf. Dem Dämpfungsventil ist eine Magnetfelderzeugungseinrichtung zugeordnet, welche zur Erzeugung und Steuerung eines Magnetfeldes dient. Damit wird eine Art von Öffnungszustand des Dämpfungsventils beeinflusst.

Die Dämpfung in Form von Schwingungen und/oder Stößen hat einen großen Einfluss auf z. B. die Fahreigenschaften von Fahrzeugen und stellt daher ein wichtiges Merkmal insbesondere bei sportlichen Fahrzeugen dar. Der Einsatz eines Dämpfers ermöglicht einen verbesserten Bodenkontakt und erlauben ein sportliches Fahren auch bei kurvenreichen Straßen. Im Millisekundenbereich schaltende Dämpfer auf magnetorheologischer Basis an den Rädern ermöglichen eine komfortable und sichere Betriebsweise. Bei Einsatz in z. B. der Lenksäule oder in Sicherheitsgurten zur Energieabsorption bei Unfällen ermöglichen derartige magnetorheologische Dämpfer eine optimale Anpassung an das Unfallszenario und damit geringstmögliche Verletzungen der Insassen.

Um die Vorteile einer Dämpfung an Fahrzeugen optimal ausnutzen zu können, ist in der Regel eine Einstellung der Dämpfungs- und gegebenenfalls der Federeigenschaften unerlässlich. Kriterien für die Einstellung sind dabei beispielsweise das Gewicht des zu dämpfenden Gegenstandes sowie die Eigenschaften des Geländes, in dem gefahren werden soll. Bei Fahrten auf glatter Fahrbahn sind andere Dämpfungseigenschaften sinnvoll als bei einer Fahrt durch das Gelände. Um jederzeit optimale Dämpfungseigenschaften zur Verfügung zu stellen, sind elektrisch steuerbare magnetorheologische Dämpfereinrichtungen bekannt geworden, die jederzeit eine bequeme Umstellung der Dämpfungseigenschaften ermöglichen.

Mit der DE 10 2012 012 535 A1 sind ein Dämpfereinrichtung und ein Verfahren zum Betreiben eines Dämpfereinrichtung bekannt geworden, bei dem die Dämpfereinrichtung ein steuerbares Dämpfungsventil mit einer Felderzeugungseinrichtung umfasst, mit der ein feldempfindliches Medium wie ein magnetorheologisches Fluid beeinflussbar ist, um die Dämpfungskraft der Dämpfereinrichtung durch Anlegen einer Feldstärke der Felderzeugungseinrichtung zu beeinflussen. Bei dieser bekannten Dämpfereinrichtung wird die Dämpfungskraft der Dämpfereinrichtung in Echtzeit eingestellt. Der Dämpfer wird dabei nicht auf einen bestimmten Fahrbahntyp eingestellt, sondern passt sich zu jedem Zeitpunkt an den aktuellen Zustand an. Dazu werden Ereignisse in Form von Stößen erkannt und es wird eine Relativgeschwindigkeit der Dämpferenden periodisch erfasst. Zur Dämpfung wird aus der Relativgeschwindigkeit ein Kennwert in Echtzeit abgeleitet und mit dem Kennwert wird wiederum eine einzustellende Feldstärke aus einer Dämpferkennlinie abgeleitet. In Echtzeit wird mit der Felderzeugungseinrichtung die einzustellende Feldstärke erzeugt, um die Dämpfungskraft unmittelbar automatisch einzustellen. Mit dieser bekannten Dämpfereinrichtung kann flexibel auf alle Arten von Stößen eingegangen werden, da nach der Erkennung einer Relativbewegung die Dämpfereinrichtung direkt angepasst an die erkannte Relativbewegung eingestellt wird.

Die bekannte Dämpfereinrichtung funktioniert sehr zuverlässig und schaltet innerhalb weniger Millisekunden und wesentlich schneller als der Stand der Technik um, sodass die Dämpfereinrichtung z. B. beim Fahrradfahren während des Überfahrens einer Wurzel oder eines Steins kontinuierlich an die gerade vorherrschenden Bedingungen angepasst wird. Während zum Beispiel bei Fahrten auf glatter Fahrbahn der Dämpfer hart eingestellt bleibt, damit nicht unnötig Antriebsenergie in der Dämpfereinrichtung dissipiert wird. Die Dämpfereinrichtung arbeitet im Prinzip sehr zufriedenstellend. Es hat sich aber herausgestellt, dass in manchen Situationen, wenn zum Beispiel die Dämpfereinrichtung an einem Fahrrad manuell langsam eingefedert wird, die Dämpfereinrichtung nicht weich einfedert, was die Dämpfereinrichtung bei einer geringen Einfedergeschwindigkeit erlauben sollte, sondern ein kratzendes oder schabendes Feedback an die Hand des Benutzers abgibt. Ein ähnliches kratzendes oder schabendes Gefühl kann der Benutzer manchmal in den auf dem Lenker aufliegenden Handflächen spüren, wenn er eine nahezu ganz glatte Straße entlangfährt. Bei echten Stößen hingegen tritt so etwas nicht auf und der Stoßdämpfer dämpft erwartungsgemäß bei stärkeren und auch bei schwächeren Stößen. Das "Kratzen" oder "Schaben" oder "Rattern" tritt wahrnehmbar bei ganz geringen Belastungen auf. Es kann beim manuellen Einfedern der Eindruck entstehen, dass der Stoßdämpfer nicht schnell genug reagiert und während des Eindämpfens ein periodischer Übergang von sehr kurzem aktiven Blockieren und Loslassen und somit "kratzendem" Einfedern erfolgt. Die resultierende Resonanz ist für den Benutzer spürbar. Ein solches Phänomen tritt auch bei anderen Einsatzgebieten auf. Die Dämpfereinrichtung taucht dann nicht so weich ein, wie es sein sollte.

Zur Abhilfe wurden die Messdaten gefiltert, was aber zu einem erheblichen und fahrdynamisch oder performancemäßig nachteiligen Zeitverzug bei der Reaktion der Dämpfereinrichtung führte, wodurch Stöße zu spät und große Stöße nicht rechtzeitig abgefedert wurden. Dies alles findet im Bereich von Mikrosekunden statt. Um einen zu großen Zeitverzug bei der Reaktion der Dämpfereinrichtung auszuschließen, wurde die Messfrequenz erhöht, um aufgrund einer schnelleren Abfolge der Messwerte jederzeit die richtige Reaktion der Dämpfereinrichtung und somit einen weicheren Übergang in allen Bereichen zu erhalten. Aber auch eine Erhöhung der Messfrequenz brachte keine Verbesserung des Ein- und Ausfederungsverhaltens. Und das, obwohl die Dämpfereinrichtung innerhalb von wenigen Millisekunden voll einstellbar ist.

Es ist deshalb die Aufgabe der vorliegenden Erfindung eine Dämpfereinrichtung zur Verfügung zu stellen, mit welcher ein schnelleres und damit besseres Ansprech- und nachfolgendes Dämpfverhalten einer steuerbaren Dämpfereinrichtung ermöglicht wird.

Diese Aufgabe wird durch ein Verfahren zur Steuerung eines Dämpfers mit den Merkmalen des Anspruchs 1 gelöst. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Verfahren dient zur Steuerung der Dämpfung einer Relativbewegung von zwei relativ zueinander bewegbaren Anschlusseinheiten, zwischen denen zur Dämpfung der Relativbewegungen wenigstens ein steuerbarer Dämpfer mit einem Dämpfungsventil mit einem magnetorheologischen Medium, Fluid oder Dämpfungsfluid vorgesehen ist. Dem wenigstens einen Dämpfungsventil ist wenigstens eine Magnetfelderzeugungseinrichtung zur Erzeugung und Steuerung eines Magnetfeldes zugeordnet. Es werden Messdatensätze wenigstens über eine Relativbewegung der Anschlusseinheiten zueinander erfasst und mit einer Filtereinrichtung aufbereitet. Ein abgeleiteter Datensatz umfasst insbesondere (einen Wert für) ein Geschwindigkeitssignal und (einen Wert für) ein Beschleunigungssignal für eine Relativbewegung der Anschlusseinheiten. Wenigstens ein aus einem erfassten Messdatensatz abgeleiteter Datensatz wird in der Speichereinrichtung hinterlegt. Wenigstens ein hinterlegter Datensatz wird analysiert und in Abhängigkeit von dem Ergebnis der Analyse wird ein Filterparametersatz bestimmt. Dabei wird bei betragsmäßig geringen Geschwindigkeitssignalen und betragsmäßig geringen Beschleunigungssignalen ein Filterparametersatz mit stärkerer Filterung und bei betragsmäßig größeren Geschwindigkeitssignalen oder betragsmäßig größeren Beschleunigungssignalen einen Filterparametersatz mit geringerer Filterung ausgewählt. Mit dem Filterparametersatz wird aus dem Messdatensatz ein Steuerdatensatz abgeleitet. Die Steuereinrichtung steuert mit dem Steuerdatensatz die Dämpfereinrichtung wenigstens teilweise und insbesondere auch vollständig.

Das erfindungsgemäße Verfahren bietet viele Vorteile, da es eine in Abhängigkeit von der Analyse der Messdaten angepasste Aufbereitung vornimmt, wodurch jederzeit geeignete Dämpfungsparameter eingestellt werden.

Das erfindungsgemäße Verfahren wird mit einer Dämpfereinrichtung ausgeführt, die zwei relativ zueinander bewegbare Anschlusseinheiten umfasst, zwischen denen zur Dämpfung von Relativbewegungen wie z. B. Stößen oder Schwingungen wenigstens ein steuerbarer Dämpfer mit einem magnetorheologischen Medium, Fluid oder Dämpfungsfluid vorgesehen ist. Der Dämpfer weist wenigstens eine erste Dämpferkammer und wenigstens ein damit verbundenes Dämpfungsventil auf. Dem wenigstens einen Dämpfungsventil ist wenigstens eine Magnetfelderzeugungseinrichtung zugeordnet, welche zur Erzeugung und Steuerung eines Magnetfeldes in wenigstens einem Dämpfungskanal des Dämpfungsventils dient. In dem Dämpfungskanal ist wenigstens zum Teil das oder wenigstens ein magnetorheologisches Fluid vorgesehen. Weiterhin sind wenigstens eine Steuereinrichtung und wenigstens eine Speichereinrichtung vorgesehen. Wenigstens eine Sensoreinrichtung ist zur Erfassung von Messdatensätzen wenigstens über eine Relativbewegung der Anschlusseinheiten zueinander vorgesehen. Vorzugsweise ist eine Mehrzahl von Datensätzen in der Speichereinrichtung hinterlegbar. Zur Aufbereitung der Messdatensätze ist eine Filtereinrichtung vorgesehen. Wenigstens ein aus einem mit der Sensoreinrichtung bei der Relativbewegung der relativ zueinander bewegbaren Anschlusseinheiten erfassten Messdatensatz abgeleiteter Datensatz ist in der Speichereinrichtung hinterlegbar. Der Messdatensatz und/oder der abgeleitete Datensatz umfasst wenigstens ein Geschwindigkeitssignal und/oder wenigstens ein Beschleunigungssignal für die Relativbewegung der Anschlusseinheiten zueinander. Es ist eine Analyseeinrichtung vorgesehen, welche dazu ausgebildet und eingerichtet ist, wenigstens einen hinterlegten Datensatz zu analysieren und in Abhängigkeit von dem Ergebnis der Analyse einen Filterparametersatz zu bestimmen. Erfindungsgemäß ist die Steuereinrichtung dazu ausgebildet, bei betragsmäßig geringen Geschwindigkeitssignalen und Beschleunigungssignalen einen Filterparametersatz mit stärkerer Filterung und bei betragsmäßig größeren Geschwindigkeitssignalen oder Beschleunigungssignalen einen Filterparametersatz mit geringerer Filterung auszuwählen. Die Steuereinrichtung ist dazu ausgebildet mit dem Filterparametersatz aus dem Messdatensatz einen Steuerdatensatz abzuleiten, sodass die Steuereinrichtung mit dem Steuerdatensatz die Dämpfereinrichtung wenigstens zum Teil oder auch vollständig steuert.

Die Steuerung der Dämpfereinrichtung mit dem erfindungsgemäßen Verfahren hat viele Vorteile. Ein erheblicher Vorteil der Steuerung der Dämpfereinrichtung besteht darin, dass mit der Analyseeinrichtung die erfassten Messdatensätze analysiert werden, sodass in Abhängigkeit von dem Ergebnis der Analyse ein Filterparametersatz ermittelt wird, mit dem aus dem Messdatensatz ein Steuerdatensatz abgeleitet wird, mit welchem das Dämpfungsventil des magnetorheologischen Dämpfers wenigstens teilweise gesteuert wird. Es wird durch Analyse der Messdatensätze der Relativbewegung der relativ zueinander bewegbaren Anschlusseinheiten jeweils ein geeigneter Filterparametersatz ermittelt, um ein schnelles und in allen Situationen ausreichend weiches Ansprechverhalten der Dämpfereinrichtung zu gewährleisten.

Unter dem Begriff Datensatz wird im Sinne der vorliegenden Erfindung ein Datensatz mit wenigstens einem darin enthaltenen Wert oder Messwert verstanden. Es ist auch möglich und bevorzugt, dass ein Datensatz mehrere unterschiedliche Werte oder Parameter enthält. So kann ein Messdatensatz beispielsweise eine Weginformation und eine Geschwindigkeitsinformation und auch eine Beschleunigungsinformation und dergleichen mehr enthalten. Möglich ist es aber auch, dass ein Messdatensatz nur einen einzigen gemessenen Wert enthält. Das Gleiche gilt auch für einen abgeleiteten Datensatz, der in der Speichereinrichtung hinterlegt wird und auch für einen Steuerdatensatz, der aus dem hinterlegten Datensatz und/oder dem Messdatensatz ermittelt wird. In ähnlicher Weise kann ein Filterparametersatz einen oder mehrere Filterparameter enthalten. Vorzugsweise umfasst ein Parametersatz mehrere Parameter. Es ist aber auch möglich, dass ein Parametersatz nur einen Parameter enthält.

Ein abgeleiteter Datensatz, der in der Speichereinrichtung hinterlegt wird, wird im Folgenden auch als "hinterlegter Datensatz" bezeichnet. Der abgeleitete und hinterlegte Datensatz kann identisch zu dem zugehörigen Messdatensatz sein oder wird durch Aufbereitung daraus gewonnen. Beispielsweise kann eine Normierung durchgeführt werden.

Insbesondere ist die Steuereinrichtung dazu ausgebildet und eingerichtet, wenigstens einen hinterlegten Datensatz zu analysieren und in Abhängigkeit von dem Ergebnis der Analyse einen Filterparametersatz aus einer Mehrzahl von Filterparametersätzen zu bestimmen und mit dem ermittelten Filterparametersatz aus dem Messdatensatz einen Steuerdatensatz abzuleiten. Insbesondere filtert die Filtereinrichtung Messdaten dann weniger intensiv, wenn eine intensivere Relativbewegung der Anschlusseinheiten zueinander vorliegt. Unter einer intensiveren Relativbewegung wird eine schnellere Relativbewegung oder eine schnellere Beschleunigung relativ zueinander oder gegebenenfalls auch eine absolute Geschwindigkeit oder Beschleunigung verstanden. Bei einer weniger intensiven Relativbewegung der Anschlusseinheiten zueinander wird hingegen intensiver gefiltert. Das bedeutet, dass die Messdaten bzw. der Wert oder die Werte eines Messdatensatzes stärker entrauscht werden. Dadurch kann ein glatterer zeitlicher Ablauf zur Verfügung gestellt werden.

Die Steuereinrichtung steuert die Dämpfereinrichtung mittelbar oder unmittelbar unter Verwendung weiterer Komponenten, wie einer (Leistungs-)Elektronik und insbesondere unter Verwendung einer Magnetfelderzeugungseinrichtung. Jedenfalls wird eine Einstellung der Dämpfung des Dämpfereinrichtung mit dem Steuerdatensatz bewirkt.

Aus den Messdatensätzen werden durch Aufbereitung und/oder durch Vorfilterung und/oder durch Filterung aufbereitete Datensätze erhalten, die vorzugsweise der weiteren Verarbeitung zugrunde gelegt werden.

Die Messung der Messdatensätze erfolgt vorzugsweise mit einer Frequenz, die größer als 200 Hz oder 500 Hz und insbesondere größer 1 kHz beträgt. In der Speichereinrichtung können sowohl der aktuelle Messdatensatz als auch wenigstens ein vorangegangener Messdatensatz bzw. wenigstens der aktuelle abgeleitete Datensatz und/oder wenigstens ein zuvor abgeleiteter Datensatz hinterlegt werden. Möglich und bevorzugt ist es auch, dass der jeweils aktuelle Steuerdatensatz in der Speichereinrichtung gespeichert wird.

Für die jeweilige Aufbereitung der Messdaten ergeben sich unterschiedliche Optionen. Bei einem ersten Durchlauf wird vorzugsweise ein voreingestellter Filterparametersatz geladen und es wird wenigstens ein erster Messdatensatz aufgenommen. Zunächst wird ein Steuerdatensatz mit dem voreingestellten Filterparametersatz aus dem Messdatensatz abgeleitet.

Danach wird gemäß einer ersten Variante in einer Schleife ein neuer bzw. aktueller Messdatensatz aufgenommen. Anschließend wird über den vorausgegangenen Steuerdatensatz ein Filterparametersatz gewählt oder abgeleitet. Mit dem derartig bestimmten Filterparametersatz wird ein aktueller Steuerdatensatz abgeleitet. Die Dämpfung der Dämpfereinrichtung wird unter Berücksichtigung dieses Steuerdatensatzes oder mit diesem Steuerdatensatz eingestellt.

Beim nächsten Schleifendurchlauf wird der zuvor noch aktuelle Messdatensatz zu dem vorherigen Messdatensatz. Es wird der aktuelle Messdatensatz aufgenommen. Über den Steuerdatensatz einer vorgehenden Schleife und insbesondere der letzten Schleife wird ein Filterparametersatz ausgewählt und es wird mit dem aktuellen Messdatensatz und dem ausgewählten Filterparametersatz ein aktueller Steuerdatensatz abgeleitet, mit Hilfe dessen anschließend die Dämpfung eingestellt wird.

In einem alternativen Verfahren kann nach dem ersten Durchlauf eine andere Schleife durchgeführt werden. Dabei wird zunächst ebenfalls ein aktueller Messdatensatz aufgenommen. Über den aktuellen Messdatensatz wird ein Filterparametersatz ausgewählt aus dem aktuellen Messdatensatz wird mit dem ausgewählten Filterparametersatz ein aktueller Steuerdatensatz abgeleitet. Danach erfolgt die Einstellung der Dämpfung unter Berücksichtigung des aktuellen Steuerdatensatzes. Eventuell kann die Ermittlung des Filterparametersatzes auch iterativ erfolgen. Dabei wird ein erneuter Teilschleifendurchlauf zur Ermittlung des Filterparametersatzes durchgeführt, falls der aktuell ermittelte Steuerdatensatz von dem vorhergehenden Steuerdatensatz um ein bestimmtes Maß abweicht oder wenn der Steuerdatensatz bzw. die darin enthaltenden Werte bestimmte Grenzen unter- oder überschreiten.

Weiterhin ist noch eine weitere Variante der Schleife möglich, wonach zunächst ein aktueller Messdatensatz aufgenommen wird und mit dem aktuellen Messdatensatz unter Verwendung des vorhergehenden Filterparametersatzes ein aktueller Steuerdatensatz abgeleitet wird. Anhand des Steuerdatensatzes wird anschließend überprüft, ob der richtige Filterparametersatz gewählt wurde. Eventuell wird der Filterparametersatz neu ausgewählt und erneut ein neuer Steuerdatensatz bzw. aktueller Steuerdatensatz abgeleitet. Auch hier kann wiederum eine Überprüfung erfolgen, ob der korrekte Filterparametersatz ausgewählt wurde. Diese Iterationsschleife kann beliebig häufig durchgeführt werden. Vorzugsweise wird die Iterationsschleife in ihrer Anzahl begrenzt, um eine dauerhafte Schleife zu vermeiden. Mit dem aktuellen Steuerdatensatz wird schließlich die Dämpfung eingestellt.

In einer bevorzugten Weiterbildung ist in der Speichereinrichtung eine Mehrzahl an Filterparametersätzen hinterlegt und in Abhängigkeit von dem wenigstens einen hinterlegten Datensatz ist ein Filterparametersatz auswählbar.

Der hinterlegte Datensatz kann in allen Fällen der Messdatensatz sein, so wie er aufgenommen wird. Möglich ist es aber auch, dass mit der Sensoreinrichtung der erfasste Messdatensatz in einem ersten Aufbereitungsschritt aufbereitet wird, um zum Beispiel standardisierte Werte zu erhalten und anschließend den so ermittelten Datensatz in der Speichereinrichtung zu hinterlegen. Vorzugsweise wird eine Mehrzahl von miteinander gemessenen und aufbereiteten Datensätzen in der Speichereinrichtung hinterlegt. Je nach Speicherfähigkeit kann ein FIFO-Verfahren gewählt werden, sodass eine Anzahl der letzten Messdatensätze jeweils in der Speichereinrichtung verbleibt.

In besonders bevorzugten Weiterbildungen umfasst die Analyseeinrichtung eine Vergleichseinrichtung und die Vergleichseinrichtung vergleicht einen hinterlegten Datensatz mit Vergleichsdaten und wählt in Abhängigkeit von dem Ergebnis des Vergleichs einen in der Speichereinrichtung abgelegten Filterparametersatz aus oder leitet ein Filterparametersatz ab und leitet aus dem Messdatensatz mit dem Filterparametersatz einen Steuerdatensatz ab. Eine solche Ausgestaltung ist sehr vorteilhaft, da ohne aufwendige Rechenoperationen sehr genaue Ergebnisse erzielbar sind.

In Abhängigkeit von dem wenigstens einen hinterlegten Datensatz ist vorzugsweise ein Filterparametersatz auswählbar. Das bedeutet, dass ein Filterparametersatz in Abhängigkeit von dem Inhalt wenigstens eines hinterlegten Datensatzes auswählbar ist. Dementsprechend kann mit der Vergleichseinrichtung ein Inhalt eines hinterlegten Datensatzes mit Vergleichsdaten verglichen werden.

In allen Ausgestaltungen ist es bevorzugt, dass eine Mehrzahl von Datensätzen in der Speichereinrichtung hinterlegbar ist. Dazu zählen neben den originalen Messdatensätzen auch die daraus abgeleiteten und in der Speichereinrichtung hinterlegten Datensätze sowie die in der Speichereinrichtung speicherbaren Steuerdatensätze und gegebenenfalls dergleichen mehr.

Besonders bevorzugt ist die Sensoreinrichtung dazu ausgebildet, wenigstens ein Wegsignal zu erfassen. In vorteilhaften Weiterbildungen ist die Steuereinrichtung dazu ausgebildet, aus einem Sensorsignal (insbesondere der der Sensoreinrichtung) ein Geschwindigkeitssignal für eine Relativbewegung der Anschlusseinheiten abzuleiten. Dazu ist eine Recheneinheit vorgesehen, die Teil der Steuereinrichtung sein kann. Vorzugsweise ist die Steuereinrichtung dazu ausgebildet, aus einem Sensorsignal (insbesondere der der Sensoreinrichtung) ein Beschleunigungssignal abzuleiten. Insbesondere ist die Steuereinrichtung dazu ausgebildet und eingerichtet aus einem Sensorsignal ein Beschleunigungssignal in der geforderten Güte abzuleiten. Dazu bestimmt die Steuereinrichtung in einer Frequenz von vorzugsweise größer 1 kHz aus dem Sensorsignal das Beschleunigungssignal. Zur Berechnung des Beschleunigungssignals ist vorzugsweise ebenfalls eine Recheneinheit vorgesehen, die auch Teil der Steuereinrichtung sein kann. Zur Berechnung des Beschleunigungssignals und des Geschwindigkeitssignals kann dieselbe Recheneinheit verwendet werden.

Bei dem erfindungsgemäßen Verfahren erfolgt die Steuerung der Dämpfereinrichtung insbesondere in Echtzeit. Das bedeutet, dass jederzeit eine Dämpfung eingestellt wird, wie sie für die aktuelle Belastungssituation erforderlich und sinnvoll ist. Die Dämpfereinrichtung wird nicht auf einen geeigneten "Mittelwert" eingestellt, sondern jederzeit wird (periodisch mit 1 kHz oder mehr) die Sensoreinrichtung ausgelesen und es werden Geschwindigkeitssignale und/oder Beschleunigungssignale erfasst und insbesondere aus Wegsignalen abgeleitet. Zu jedem Zeitpunkt wird nun in Echtzeit zu dem aktuellen Geschwindigkeitssignal eine passende Dämpfung eingestellt, da die Dämpfereinrichtung in wenigen Millisekunden frei einstellbar ist.

Vorzugsweise ist die unbeanspruchte Steuereinrichtung dazu ausgebildet, bei betragsmäßig geringen Geschwindigkeitssignalen und Beschleunigungssignalen einen Filterparametersatz mit stärkerer Filterung auszuwählen. Vorzugsweise ist die Steuereinrichtung dazu ausgebildet, bei betragsmäßig größeren Geschwindigkeitssignalen oder Beschleunigungssignalen einen Filterparametersatz mit geringerer Filterung auszuwählen. Das bedeutet, dass ein Filterparametersatz mit stärkerer Filterung ausgewählt wird, wenn das Geschwindigkeitssignal und das Beschleunigungssignal klein sind. Eine Filterparametersatz mit geringerer Filterung wird ausgewählt, wenn auch nur eines von beiden Signalen, nämlich Geschwindigkeitssignal und Beschleunigungssignal größer ist. Dadurch wird eine sehr schnelle Reaktion bei Stößen gewährleistet, während bei geringen Signalen ein stärkere Glättung erfolgt. Es wird aber verhindert, dass beim Auftreten eines starken Stoßes darauf erst (zu) spät reagiert wird.

Ein solches Rattern tritt, wie sich herausgestellt hat, insbesondere dann auf, wenn das Geschwindigkeitssignal unter 10% und eher unter 5% des im Betrieb typischen maximalen Geschwindigkeitssignals beträgt. Wenn bei einem kräftigen Stoß das maximal auftretende Geschwindigkeitssignal z. B. etwa 0,5 m/s oder 1 m/s beträgt, so kann ein "Kratzen" insbesondere bei Geschwindigkeitssignalen von bis zu 0,05 oder 0,02 m/s auftreten. Hier wird nun bei unter einer vorbestimmten Grenze liegenden Geschwindigkeitssignalen stärker gefiltert, sodass stärker entrauscht wird. Bei darüber liegenden Geschwindigkeitssignalen wird hingegen weniger stark oder gar nicht gefiltert. Werden allerdings relativ große Beschleunigungssignale oberhalb einer vorbestimmten Grenze ermittelt, wird das Geschwindigkeitssignal auch bei geringer Absolutgröße weniger intensiv gefiltert. Durch diese Kombination wird ein optimales Ergebnis erreicht. Bei starken Signalen wird wenig (oder gar nicht) gefiltert, sodass das Geschwindigkeitssignal (fast) direkt zur Einstellung der Dämpfung eingesetzt wird. Das ist vorteilhaft, da bei einer solchen Echtzeitdämpfung (bei "echten" Stößen) jeder Zeitverzug nachteilig sein kann. Bei geringen Stößen oder Vibrationen, die kleine Geschwindigkeitssignale und Beschleunigungssignale erzeugen, wird stärker gefiltert und insbesondere geglättet. Ein Zeitverzug spielt bei geringen Belastungen keine besondere Rolle.

Vorteilhafterweise ist die Sensoreinrichtung dazu geeignet und ausgebildet, das Wegsignal mit einer Auflösung von besser als 100 $\mu$m zu erfassen. Die Auflösung des Wegsignals kann auch besser als 50 $\mu$m oder besser als 30 $\mu$m und vorzugsweise besser als 10 $\mu$m sein. Mit einer Sensoreinrichtung, die Wegsignale mit einer sehr hohen Auflösung erfasst, kann eine sehr genaue Steuerung des Fahrwerks erfolgen.

Insbesondere ist die Sensoreinrichtung dazu geeignet und ausgebildet, das Sensorsignal mit einer Messfrequenz von wenigstens 500 Hz oder wenigstens 1 kHz zu erfassen. Dabei kann die Messfrequenz auch 5 kHz erreichen oder überschreiten.

In besonders bevorzugten Weiterbildungen umfasst der Dämpfer neben der ersten Dämpferkammer wenigstens eine zweite Dämpferkammer. Dabei sind die erste Dämpferkammer und die zweite Dämpferkammer über wenigstens das oder ein insbesondere steuerbares Dämpfungsventil miteinander gekoppelt. Besonders bevorzugt ist dem wenigstens einen Dämpfungsventil oder wenigstens einem Dämpfungsventil wenigstens eine Magnetfelderzeugungseinrichtung zugeordnet, welche zur Erzeugung und Steuerung eines Magnetfeldes in wenigstens ein Dämpfungskanal des Dämpfungsventils dient. Besonders bevorzugt ist in dem Dämpfungskanal wenigstens ein magnetorheologisches Fluid oder allgemein Medium vorgesehen. Durch ein magnetorheologisches Medium in dem Dämpfungskanal kann über eine Ansteuerung der Magnetfelderzeugungseinrichtung wenigstens eine Eigenschaft des Dämpfereinrichtung individuell und schnell eingestellt werden. Innerhalb weniger Millisekunden kann eine vollständige Neueinstellung der Dämpferkraft der Dämpfer bzw. des Dämpfereinrichtung erfolgen.

In bevorzugten Weiterbildungen des erfindungsgemäßen Verfahrens werden aus dem Messdatensatz wenigstens ein Geschwindigkeitssignal bzw. Geschwindigkeitsdaten abgeleitet. Ebenso können aus dem Messdatensatz wenigstens ein Beschleunigungssignal bzw. Beschleunigungsdaten abgeleitet werden.

In bevorzugten Weiterbildungen wird ein Messdatensatz bzw. wenigstens ein Wert eines Messdatensatzes dann stärker gefiltert, wenn der Betrag des jeweiligen Wertes des Messdatensatzes kleiner ist als wenn der Betrag des Wertes bzw. der Werte des Messdatensatzes größer ist. Zur Unterscheidung, ob eine stärkere oder schwächere Filterung durchgeführt wird, können Schwellenwerte oder es kann ein Grenzwertsatz vorgesehen sein. Die Werte des Messdatensatzes können Wegwerte, Beschleunigungswerte und/oder Geschwindigkeitswerte enthalten. Unter einem Filtern kann auch ein Glätten der Werte verstanden werden. Unter dem Begriff "Betrag der Werte" wird der mathematische Betrag - also vorzeichenlos - verstanden.

Insbesondere wird bei geringen Geschwindigkeiten der Relativbewegung stärker gefiltert als bei hohen Geschwindigkeiten. Dabei wird insbesondere das Geschwindigkeitssignal berücksichtigt, um zu entscheiden, ob stärker gefiltert oder schwächer gefiltert wird.

Ebenso ist es bevorzugt, dass bei geringen Beschleunigungen bzw. Beschleunigungssignalen der Relativbewegung stärker gefiltert wird als bei hohen Beschleunigungen bzw. hohen Beschleunigungssignalen.

Unter dem Begriff "stärker" filtern wird hier ein intensiveres Filtern verstanden. Das bedeutet, dass stärker gefilterte Messdaten intensiver entrauscht werden. Das kann zum Beispiel dadurch erfolgen, dass eine größere Anzahl vorangegangener Messdaten berücksichtigt wird oder indem vorangegangene Messdaten mit einer höheren Gewichtung berücksichtigt werden. Eine stärkere Filterung führt zu einer stärkeren Glättung als eine schwächere Filterung. Das führt zu einer geringeren Grenzfrequenz. Kanten werden bei einer stärkeren Filterung runder als bei einer schwächeren Filterung, bei der die Grenzfrequenz höher ist. Eine stärkere Filterung führt insbesondere zu einem stärkeren Entrauschen (engl. denoising) als eine schwächere Filterung. Besonders bevorzugt werden Geschwindigkeitssignale und Beschleunigungssignale berücksichtigt, um zu entscheiden, wie stark gefiltert wird. Wenn das Geschwindigkeitssignal eine vorbestimmte Geschwindigkeitsgrenze oder wenn das Beschleunigungssignal eine vorbestimmte Beschleunigungsgrenze überschreitet, wird schwächer gefiltert, als wenn das Geschwindigkeitssignal und das Beschleunigungssignal kleiner als die jeweilige Grenze sind.

Es hat sich überraschenderweise herausgestellt, dass bei hohen Geschwindigkeitssignalen und/oder hohen Beschleunigungssignalen eine wesentlich schwächere Aufbereitung erforderlich ist als bei geringen Beschleunigungssignalen oder geringen Geschwindigkeitssignalen. Bei hohen Beschleunigungssignalen und/oder Geschwindigkeitssignalen, die bei dem Überfahren von Hindernissen auftreten, reicht eine geringe Filterung oder Glättung aus oder es kann vollständig darauf verzichtet werden. Bei kleinen oder kleinsten Stößen treten hingegen meist nur eine geringe Beschleunigung und eine geringe Relativgeschwindigkeit zwischen den Anschlusseinheiten der Dämpfereinrichtung auf. In Verbindung mit einer begrenzten Orts- und Geschwindigkeitsauflösung und der Digitalisierung (d. h. der Zeitdiskretisierung und der Wertdiskretisierung) des Messergebnisses ergibt sich hier schon durch das Prinzip bedingt ein Rauschen, wodurch die Messwerte ohne weitere Aufbereitung nicht immer zu einer zufriedenstellenden Betriebsweise der Dämpfereinrichtung führen. Eine Erhöhung der Messfrequenz führt dann sogar noch zu einer Vergrößerung des Rauschens, da bei höheren Messfrequenzen zwischen einzelnen Messungen jeweils noch kleinere Wertveränderungen ermittelt werden, die aber einen vergleichbaren Fehler aufweisen. Deshalb führt eine beliebige Erhöhung der Messfrequenz nicht zu einer Verbesserung des Messergebnisses, sondern kann kontraproduktiv sein, jedenfalls, wenn die Auflösung der Sensoreinrichtung nicht entsprechend mit vergrößert wird.

Da die Erfindung eine Dämpfereinrichtung und ein Verfahren zur Steuerung betrifft, bei dem die Steuerung des Dämpfers insbesondere in Echtzeit erfolgt, muss die Messfrequenz so hoch sein, dass jederzeit ausreichend schnell auf alle zu erwartenden Ereignisse reagiert werden kann. So muss eine Dämpfereinrichtung beim Auftreten eines Stoßes beim z. B. Überfahren von zum Beispiel einem Bumper, einem Schlagloch, einer Wurzel oder bei einem Sprung so schnell reagieren und die passende Dämpfereinstellung vornehmen, dass jeweils optimale oder doch wenigstens ausreichende Dämpfungseigenschaften vorliegen. Derartige Zeiterfordernisse bestehen z. B. bei Kraftfahrzeugen nach dem Stand der Technik heute regelmäßig nicht, da dort kein Stoß in Echtzeit gedämpft wird bzw. aufgrund der "langsamen" Dämpfer gedämpft werden kann, sondern maximal die generelle Dämpfereinstellung geändert wird. Erfindungsgemäß wird die Dämpfereinstellung der Dämpfereinrichtung während eines Stoßes vielfach angepasst, um jeweils optimale Dämpfereinstellungen zu haben. Deshalb müssen die Messfrequenz und die Reglerfrequenz der Steuereinrichtung entsprechend hoch sein, um das Konzept bei hoher Dynamik umzusetzen.

Vorzugsweise werden wenigstens mehrere nacheinander erfasste Datensätze in der Speichereinrichtung gespeichert. Dadurch kann zur Aufbereitung des aktuellen Messdatensatzes auf mehrere zuvor erfasste Datensätze zurückgegriffen werden. Das ermöglicht beispielsweise eine gleitende Mittelung oder Glättung der Messdaten über mehrere Datensätze hinweg, z. B. über 2, 3, 4, 5, 6, 8 oder 10 Datensätze hinweg. Dadurch werden eine deutliche Reduzierung des digitalen Rauschens und des Rauschens als Ganzes erzielt.

Bei besonders hohen Messfrequenzen (z. B. 20 kHz oder 50 kHz oder 100 kHz oder mehr) kann auch eine Mittelung von einer gewissen Anzahl von Messungen durchgeführt werden und der Mittelwert von mehreren (z. B. 2, 3 oder 5 oder 10) Messungen wird als Messdatensatz ausgegeben. Ein solches "Oversampling" kann sowohl hardware- als auch softwareseitig durchgeführt werden. Wichtig ist, dass die Rate der Ausgabe der Messdatensätze ausreichend schnell ist.

Vorzugsweise hängt eine Stärke oder Intensität der Glättung von dem hinterlegten Datensatz ab. Insbesondere hängt eine Stärkung der Glättung von dem aktuellen Datensatz ab. Dabei ist es möglich und bevorzugt, dass beispielsweise bei einer gleitenden Mittelung die Anzahl der für die Mittelung herangezogenen Datensätze variiert wird. Wird beispielsweise eine stärkere Filterung gewünscht, so kann die Glättung über entsprechend mehr nacheinander aufgenommene Datensätze durchgeführt werden, während bei einer schwächeren Filterung eine entsprechend geringere Anzahl von Datensätzen zur Mittelung berücksichtigt wird.

Möglich und bevorzugt ist es auch, dass die Anteilsfaktoren für eine gleitende Mittelung in Abhängigkeit von der Stärke der gewünschten Filterung variiert werden. Bei einer stärkeren Filterung können beispielsweise benachbarte oder vorausgegangene Messwerte mit der gleichen Gewichtung oder einer ähnlichen Gewichtung berücksichtigt werden wie der aktuelle Messwert. Beispielsweise können für eine stärkere Filterung der aktuelle Messwert und die vorangegangenen 4 Werte (10 Werte) zu jeweils 20% (10%) berücksichtigt werden. Bei einer schwächeren Filterung können hingegen (weniger Messwerte und) zeitlich weiter beabstandete Messwerte mit einem geringeren Anteilsfaktor berücksichtigt werden. Beispielsweise kann bei einer schwächeren Filterung der aktuelle Messwert mit 75% und der vorangegangene Messwert mit 25% berücksichtigt werden. Oder es werden der aktuelle Messwert und der davor jeweils zu 50 % berücksichtigt, während bei einer stärkeren Filterung der aktuelle Messwert und die beiden Messwerte davor jeweils mit gleicher Gewichtung (33%) berücksichtigt werden.

Neben einer Filterung über gleitende Mittelwerte können auch IIR-Filter (engl. Infinite Impulse Response) oder FIR-Filter (engl. Finite Impulse Response) oder andere Filter eingesetzt werden. Bevorzugt ist auch der Einsatz eines Kalman-Filters, wobei sich dann mit der Stärke der Filterung wenigstens ein Parameter des Kalman-Filters variiert wird.

In allen Ausgestaltungen ist es besonders bevorzugt, dass mit der Sensoreinrichtung Messdatensätze mit einer Messfrequenz größer 250 Hz (insbesondere 500 Hz und vorzugsweise 1 kHz) erfasst werden und/oder dass die Steuereinrichtung Steuerdatensätze mit einer Steuerfrequenz größer 250 Hz (insbesondere 500 Hz und vorzugsweise 1 kHz) ermittelt. Vorzugsweise wird die Dämpfereinrichtung wenigstens zeitweise mit wenigstens dieser Steuerfrequenz von 250 Hz (insbesondere 500 Hz und vorzugsweise 1 kHz) angesteuert. Besonders bevorzugt sind die Messfrequenz und die Steuerfrequenz jeweils >2 kHz. Vorzugsweise sind die Messfrequenz und/oder die Steuerfrequenz größer als 5 kHz.

Besonders bevorzugt erfasst die Sensoreinrichtung Wegsignale mit einer Auflösung kleiner 100 $\mu$m oder kleiner als 50 $\mu$m. Vorzugsweise wird eine Auflösung kleiner als 30 $\mu$m und besonders bevorzugt kleiner als 10 $\mu$m erreicht. Dadurch können hoch aufgelöste Relativbewegungen ermittelt werden, wodurch die Genauigkeit steigt.

In allen Ausgestaltungen ist es besonders bevorzugt, wenn die Messfrequenz und die Steuerfrequenz wenigstens zeitweise größer als 8 kHz und die Auflösung der Wegsignale wenigstens zeitweise kleiner als 10 $\mu$ oder 5 $\mu$m beträgt. Dabei ist es besonders bevorzugt, wenn die Messfrequenz kleiner als 50 kHz beträgt und vorzugsweise kleiner als 20 kHz beträgt oder wenn die Ausgabe von Messdatensätzen mit einer Frequenz kleiner als 50 kHz und vorzugsweise kleiner als 20 kHz erfolgt.

Es ist auch möglich und bevorzugt, dass die Messfrequenz und die Steuerfrequenz unterschiedlich sind. Vorzugsweise ist die Messfrequenz größer als die Steuerfrequenz. Die Steuerfrequenz ist vorzugsweise größer 50 Hz und insbesondere größer 100 Hz und vorzugsweise größer 250 Hz oder größer 500 Hz. Die Messfrequenz ist insbesondere größer 250 Hz und vorzugsweise größer 500 Hz und besonders bevorzugt größer 1 kHz. Ein Verhältnis von Messfrequenz zu Steuerfrequenz kann größer 2 und insbesondere größer 4 und vorzugsweise größer 8 oder 16 sein.

Insgesamt stellt die Erfindung ein vorteilhaftes Verfahren und eine vorteilhafte Dämpfereinrichtung zur Verfügung, womit in allen Lastbereichen ein angepasstes und jeweils glattes Ansprechverhalten ermöglicht wird. Überraschenderweise hat nicht eine Erhöhung der Messfrequenz das gewünschte Resultat gebracht, sondern eine Analyse der jeweiligen Messwerte und eine in Abhängigkeit von den jeweiligen Messwerten durchgeführte Filterung. Es hat sich nämlich herausgestellt, dass die Messwertaufnahme zuvor nicht zu langsam war, sondern bei geringen Dämpfergeschwindigkeiten eher zu schnell, da auch aufgrund des zwangsläufig auftretenden Rauschens, welches wenigstens zum Teil auch durch Digitalisierungseffekte bewirkt wird, mit zunehmender Messfrequenz bei geringen Änderungsgeschwindigkeiten der Messgrößen die relativen Fehler zunehmen, weshalb der Dämpfereinrichtung aufgrund seiner hohen Reaktionsgeschwindigkeit die rauschbehafteten Werte zu schnell einstellte. Bei besonders starken Stößen ändern sich hingegen die Messwerte von einem Schritt zum nächsten mit einer solchen Geschwindigkeit, dass durch die Digitalisierung keine nennenswerten Fehler eingebracht werden.

In einer Variante umfasst eine unbeanspruchte Dämpfereinrichtung zwei relativ zueinander bewegbare Anschlusseinheiten, zwischen denen zur Dämpfung von Relativbewegungen wie z. B. Stößen oder Schwingungen wenigstens ein steuerbarer magnetorheologischer Dämpfer vorgesehen ist. Es sind wenigstens eine Steuereinrichtung und wenigstens eine Speichereinrichtung vorgesehen. Wenigstens eine Sensoreinrichtung ist zur Erfassung von Messdatensätzen wenigstens über eine Relativbewegung der Anschlusseinheiten zueinander vorgesehen. Zur Aufbereitung der Messdatensätze ist eine Filtereinrichtung vorgesehen. Wenigstens ein aus einem mit der Sensoreinrichtung bei der Relativbewegung der relativ zueinander bewegbaren Anschlusseinheiten erfassten Messdatensatz abgeleiteter Datensatz ist in der Speichereinrichtung hinterlegbar. Es ist eine Analyseeinrichtung vorgesehen, welche dazu ausgebildet und eingerichtet ist, wenigstens einen hinterlegten Datensatz zu analysieren und in Abhängigkeit von dem Ergebnis der Analyse einen Filterparametersatz zu bestimmen und mit dem Filterparametersatz aus dem Messdatensatz einen Steuerdatensatz abzuleiten, sodass die Steuereinrichtung mit dem Steuerdatensatz die Dämpfereinrichtung wenigstens zum Teil oder auch vollständig steuert. Weiterbildungen enthalten einige oder alle Merkmale der zuvor beschriebenen Dämpfereinrichtung.

Als vorteilhaft hat sich auch eine Erhöhung der Messgenauigkeit und/oder der Messauflösung herausgestellt. Besonders vorteilhaft sind eine aufeinander abgestimmte Anpassung von Messauflösung und Messfrequenz und eine Filterung der Messdaten nach Analyse der Messdaten. Dabei erfolgt die Auswertung in Echtzeit.

In allen Ausgestaltungen ist es vorzugsweise möglich, dass die Filtereinrichtung in die Steuereinrichtung integriert ist. Die Filterung kann wenigstens zum Teil oder vollständig durch eine Recheneinheit der Steuereinrichtung durchgeführt werden.

Weitere Vorteile und Merkmale der vorliegenden Erfindung ergeben sich aus den Ausführungsbeispielen, welche mit Bezug auf die beiliegenden Figuren erläutert werden.

In den Figuren zeigen:

Fig. 1      eine schematische Darstellung eines Fahrrads mit einer Dämpfereinrichtung;

Fig. 2      eine schematische Darstellung der Steuerung der Dämpfereinrichtung nach Fig. 1;

Fig. 3      eine schematische geschnittene Darstellung einer weiteren Dämpfereinrichtung z. B. für das Fahrrad nach Figur 1;

Fig. 4      die Sensoreinrichtung der Dämpfereinrichtung nach Figur 3 in einer vergrößerten Darstellung;

Fig. 5      eine alternative Sensoreinrichtung für die Dämpfereinrichtung nach Figur 3;

Fig. 6      eine weitere Sensoreinrichtung für die Dämpfereinrichtung nach Figur 3;

Fig. 7      noch eine Sensoreinrichtung für die Dämpfereinrichtung nach Figur 3;

Fig. 8      eine schematische Darstellung der Datenaufbereitung der mit der Sensoreinrichtung gemessenen Daten; und

Fig.      9a bis 9c reale Messdaten der Dämpfereinrichtung nach Fig.3.

Mit Bezug auf die beiliegenden Figuren werden Ausführungsbeispiele und Varianten der Erfindung anhand einer Dämpfereinrichtung 100 mit einem Dämpfer 1 beschrieben. Die Dämpfereinrichtung 100 wird hier an einem Fahrrad 200 eingesetzt.

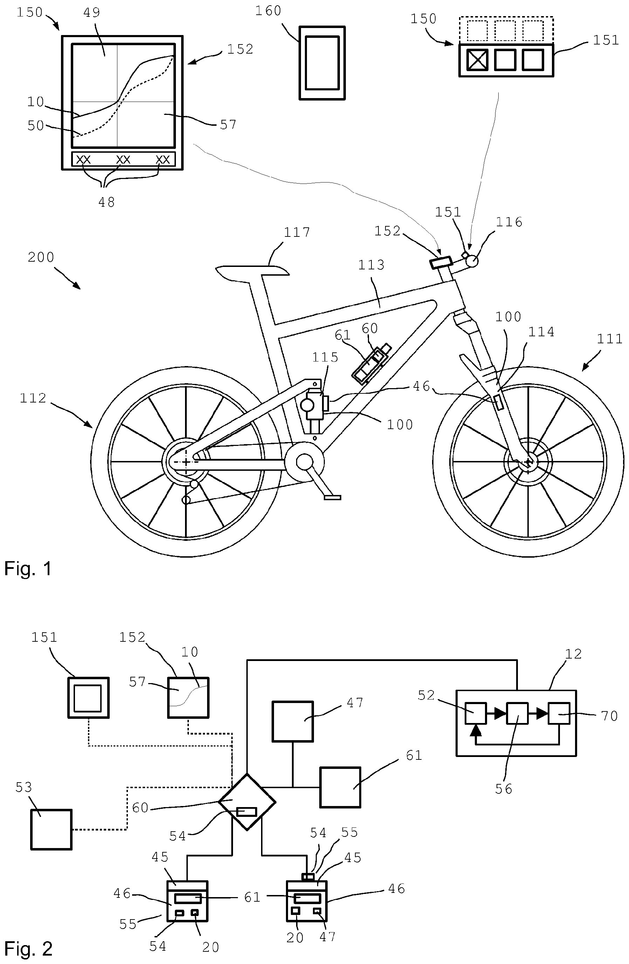

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über die dargestellten Scheibenbremsen verfügen. Eine Gangschaltung dient zur Wahl des Übersetzungsverhältnisses. Weiterhin weist das Fahrrad 200 eine Lenkeinrichtung 116 mit einem Lenker und einen Sattel 117 auf.

Das Vorderrad 111 verfügt über eine als Federgabel 114 ausgeführte Dämpfereinrichtung 100 und an dem Hinterrad 112 ist ein als Hinterraddämpfer 115 ausgeführte Dämpfereinrichtung 100 vorgesehen.

Die Dämpfereinrichtung 100 umfasst im einfachsten Fall einen Dämpfer 1 und eine Steuereinrichtung 46. Möglich ist es auch, dass die Dämpfereinrichtung 100 zwei Dämpfer 1 (Federgabel und Hinterradstoßdämpfer) umfasst, an denen jeweils eine Steuereinrichtung 46 vorgesehen ist. Oder die Dämpfereinrichtung 100 umfasst zwei Dämpfer 1 und eine (zentrale) Steuereinrichtung 60. Die (zentrale) Steuereinrichtung 60 kann zur Einstellung der Vorgaben und zur Koordination der beiden Dämpfer dienen.

Die zentrale Steuereinrichtung 60 ist hier zusammen mit einer Batterieeinheit 61 in einem trinkflaschenartigen Behälter vorgesehen und an dem Unterrohr angeordnet, wo sonst eine Trinkflasche angeordnet ist, kann aber auch im Rahmen vorgesehen werden. Die zentrale Steuereinrichtung 60 kann auch an dem Lenker 116 angeordnet werden.

Die Steuerung der Dämpfer 1 und weiterer Fahrradkomponenten kann in Abhängigkeit verschiedenster Parameter erfolgen und erfolgt im Wesentlichen auch anhand von sensorisch erfassten Daten. Insbesondere kann auch eine Alterung des Dämpfungsmediums, der Federeinrichtung und weiterer Komponenten berücksichtigt werden. Es ist auch bevorzugt, die Temperatur der Dämpfereinrichtung 100 oder des Dämpfers 1 zu berücksichtigen (Federgabel 114 und/oder Hinterradstoßdämpfer 115).

Die Dämpfereinrichtung 100 und deren zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und kann einen berührungsempfindlichen Bildschirm aufweisen und ebenfalls am Lenker 116 positioniert werden. Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird.

Das Display 49 ist insbesondere als grafische Bedieneinheit oder Touchscreen 57 ausgeführt, sodass der Benutzer beispielsweise eine dargestellte Dämpferkennlinie 10 mit den Fingern berühren und durch Ziehen ändern kann. Dadurch kann aus der durchgezogen dargestellten Dämpferkennlinie 10 die auch dargestellte Dämpferkennlinie 50 erzeugt werden, die dann ab sofort für die Steuerung eingesetzt wird. Die Veränderung der Dämpferkennlinien 10, 50 ist auch während der Fahrt möglich.

Die Einstelleinrichtung 152 kann auch als Fahrradcomputer dienen und Informationen über die aktuelle Geschwindigkeit, sowie über die Durchschnittsgeschwindigkeit und/oder die Tages-, Tour, Runden- und Gesamtkilometer anzeigen. Möglich sind auch die Anzeige der aktuellen Position, der momentanen Höhe der gefahrenen Strecke sowie des Streckenprofils und auch eine mögliche Reichweite unter den aktuellen Dämpfungsbedingungen.

Figur 2 zeigt eine schematische Darstellung der Steuerung der Dämpfereinrichtung 100 und der Kommunikationsverbindungen einiger beteiligter Komponenten. Die zentrale Steuereinrichtung 60 kann drahtgebunden oder drahtlos mit den einzelnen Komponenten verbunden sein. Beispielsweise kann die Steuereinrichtung 60 (bzw. 46) über WLAN, Bluetooth, ANT+, GPRS, UMTS, LTE oder sonstige Übertragungsstandards mit den anderen Komponenten verbunden sein. Gegebenenfalls kann die Steuereinrichtung 60 über die gepunktet dargestellte Verbindung mit dem Internet 53 drahtlos verbunden sein.

Die Steuereinrichtungen 46 und/oder 60 sind mit wenigstens einer Sensoreinrichtung 20 oder mit mehreren Sensoren verbunden. Die Steuereinrichtung 60 ist über Netzwerkschnittstellen 54 oder Funknetzschnittstellen 55 mit Steuereinrichtungen 46 der Dämpfer 1 am Vorderrad und am Hinterrad verbunden. Die möglicherweise an jedem Dämpfer 1 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Dämpfer über die Steuereinrichtung 60 erfolgt. Möglich ist auch eine lokale Steuerung der Dämpfer 1 über zugeordnete Steuereinrichtung 46.

Vorzugsweise ist jedem Dämpfer 1 wenigstens eine Sensoreinrichtung 20 zugeordnet, um Relativbewegungen zwischen den Komponenten bzw. Anschlusseinheiten 101 und 102 zu erfassen. Insbesondere ist eine Relativposition der Komponenten 101 und 102 relativ zueinander bestimmbar. Die Sensoreinrichtung 20 ist vorzugsweise als (relativer) Wegsensor ausgebildet oder umfasst wenigstens einen solchen und ist in den Dämpfer 100 integriert. Möglich und bevorzugt ist auch der Einsatz wenigstens eines zusätzlichen Beschleunigungssensors 47. Die Sensoreinrichtung 20 kann auch vorzugsweise als Geschwindigkeitssensor ausgebildet sein oder einen solchen umfassen.

Anhand der in der Speichereinrichtung 45 abgelegten Dämpferkennlinie 10 des Dämpfers 100 werden nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der Einfeder-Position (sag) nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

In Figur 2 ist der Steuerkreislauf 12 schematisch dargestellt, der in der Speichereinrichtung 45 abgelegt ist und in der Steuereinrichtung 46 oder 60 hinterlegt oder einprogrammiert ist. Der Steuerkreislauf 12 wird im Betrieb periodisch und insbesondere kontinuierlich periodisch durchgeführt. Im Schritt 52 wird mit der Sensoreinrichtung 20 eine aktuelle Relativbewegung bzw. Relativgeschwindigkeit der ersten Komponente bzw. Anschlusseinheit 101 zur zweiten Komponente bzw. Anschlusseinheit 102 erfasst. Aus den Werten der Sensoreinrichtung 20 wird im Schritt 52 ein Kennwert abgeleitet, der repräsentativ für die aktuelle Relativgeschwindigkeit ist. Vorzugsweise wird als Kennwert eine Relativgeschwindigkeit verwendet.

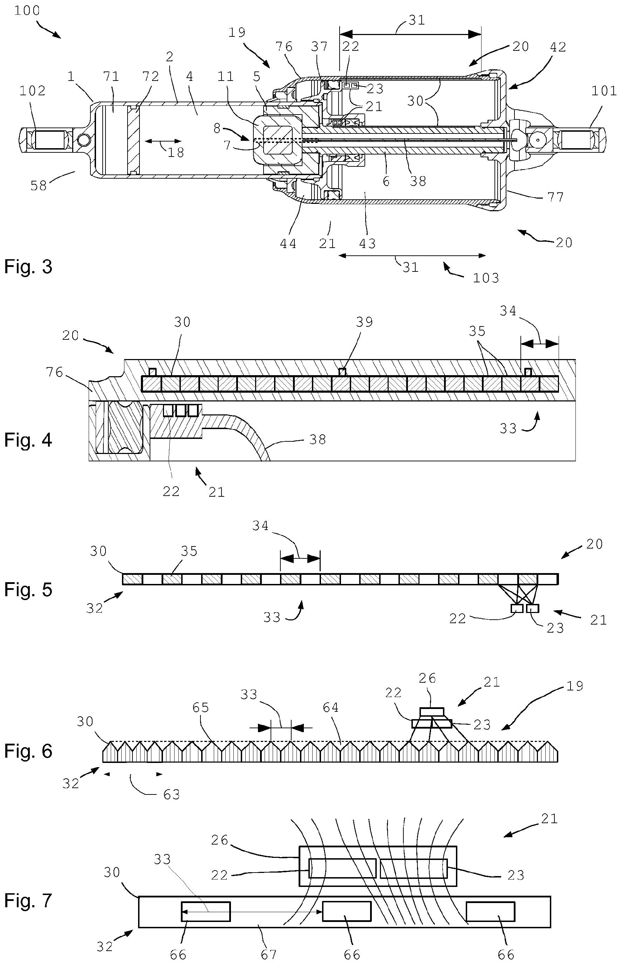

Der (vgl. Fig. 3) Dämpfer 1 weist eine erste und eine zweite Dämpferkammer auf, zwischen denen ein Dämpfungsventil 8 angeordnet ist. Das Dämpfungsventil 8 weist wenigstens einen Dämpfungskanal 7 auf, der einem Magnetfeld einer elektrischen Spuleneinrichtung ausgesetzt wird, um das magnetorheologische Medium bzw. Fluid (MRF) in dem Dämpfungskanal 7 zu beeinflussen und so die gewünschte Dämpfungskraft einzustellen. Bei der Einstellung der Dämpfungskraft wird eine Dämpferkennlinie berücksichtigt.

Im Schritt 56 wird dann anschließend aus den aktuellen Messwerten unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12 die Dämpfungskraft erzeugt wird, die bei der gewählten oder vorbestimmten Dämpferkennlinie zu der aktuellen Relativgeschwindigkeit der ersten Anschlusseinheit 101 zu der zweiten Anschlusseinheit 102 vorgesehen ist. Anschließend startet der nächste Zyklus und es wird wieder Schritt 52 durchgeführt. Jeder Zyklus benötigt insbesondere weniger als 30 ms und insbesondere weniger als 20 ms. Es ist möglich, dass die Erfassung der Sensordaten und die nachfolgenden Berechnungen mit höherer Geschwindigkeit durchgeführt werden (z.B. ein insbesondere ganzzahliges Vielfaches der Messfrequenz).

Figur 3 zeigt ein Ausführungsbeispiel einer Dämpfereinrichtung 100 mit einem Dämpfer 1 und hier mit einer Federeinrichtung 42, die als Luftfeder ausgeführt ist und eine Positivkammer 43 und eine Negativkammer 44 umfasst. Der Dämpfer 1 wird mit dem ersten Ende als Komponente 101 und dem zweiten Ende als Komponente 102 an unterschiedlichen Teilen einer Trageinrichtung 120 (hier an einem Fahrzeug) befestigt, um Relativbewegungen zu dämpfen. Der Dämpfer 1 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Der Kolben 5 ist mit einer Kolbenstange 6 verbunden. In dem Dämpfungskolben 5 ist das gestrichelt eingezeichnete magnetorheologische Dämpfungsventil 8 vorgesehen, welches hier eine elektrische Spule 11 als Felderzeugungseinrichtung umfasst, um eine entsprechende Feldstärke zu erzeugen. Das Dämpfungsventil 8 bzw. der "Öffnungszustand" des Dämpfungsventils wird über die elektrische Spuleneinrichtung 11 angesteuert.

Die Spule der elektrischen Spuleneinrichtung 11 ist nicht in Umfangsrichtung um die Kolbenstange 6 herumgewickelt, sondern um eine Achse, die sich quer zur Längserstreckung der Kolbenstange 6 (und hier parallel zur Zeichnungsebene) erstreckt. Eine Relativbewegung findet hier linear statt und erfolgt in der Bewegungsrichtung 18. Die Magnetfeldlinien verlaufen dabei in dem Zentralbereich des Kerns etwa senkrecht zur Längserstreckung der Kolbenstange 6 und durchtreten somit etwa senkrecht die Dämpfungskanäle 7. Ein Dämpfungskanal befindet sich hinter der Zeichnungsebene und ist gestrichelt eingezeichnet. Dadurch wird eine effektive Beeinflussung des sich in den Dämpfungskanälen 7 befindenden magnetorheologischen Fluides bewirkt, sodass der Durchfluss durch das Dämpfungsventil 8 effektiv gedämpft werden kann.

In dem Dämpfergehäuse 2 ist ein Ausgleichskolben 72 angeordnet, der einen Ausgleichsraum 71 für das Volumen der beim Einfedern eintretenden Kolbenstange abtrennt.

Nicht nur in dem Dämpfungsventil 8, sondern hier in den beiden Dämpfungskammern 3 und 4 befindet sich hier überall (außer im Ausgleichsraum 71) ein magnetorheologisches Fluid als feldempfindliches Medium. In dem Ausgleichsraum 71 befindet sich vorzugsweise ein Gas oder Gasgemisch.

Die Dämpfereinrichtung 100 weist eine Sensoreinrichtung 20 auf. Die Sensoreinrichtung 20 umfasst jeweils einen Detektorkopf 21 und eine strukturiert ausgebildete Maßstabeinrichtung 30.

Die Maßstabeinrichtung 30 umfasst hier ein Sensorband mit Permanentmagneteinheiten als Felderzeugungseinheiten. Die Pole der Permanentmagneteinheiten wechseln sich alternierend ab, sodass entlang der Bewegungsrichtung des Detektors 22 alternierend Nord-Südpole angeordnet sind. Die magnetische Feldstärke wird durch den Detektorkopf ausgewertet und daraus wird die jeweils aktuelle Position 19 ermittelt. Der Aufbau und die Funktion der Sensoreinrichtung 20 werden im Folgenden noch detaillierter erläutert.

Zur besseren Verdeutlichung sind in Fig. 3 zwei verschiedene Varianten einer Sensoreinrichtung 20 eingezeichnet. In beiden Varianten ist die Sensoreinrichtung 20 innerhalb eines Gehäuses der Dämpfereinrichtung 1 angeordnet bzw. wird von einem Gehäuse 2 oder 76 der Dämpfereinrichtung auf wenigstens einem Längsabschnitt radial umgeben. Das bedeutet, dass die Sensoreinrichtung 20 wenigstens abschnittsweise innerhalb des Außenumfangs des Federgehäuses 76 und/oder innerhalb des Außenumfangs des Dämpfergehäuses 2 angeordnet ist.

Die Federeinrichtung 42 erstreckt sich hier wenigstens teilweise um das Dämpfergehäuse 2 herum und umfasst ein Federgehäuse 76. Ein Ende des Dämpfers 1 ist mit einem Federungskolben 37 verbunden bzw. bildet einen solchen. Der Federungskolben 37 trennt die Positivkammer 43 von einer Negativkammer 44. Das Dämpfergehäuse 2 mit der ersten Dämpferkammer 3 taucht in das Federgehäuse 76 ein bzw. ist davon umgeben. Je nach Einfederungszustand umgibt das Federgehäuse 76 auch die zweite Dämpferkammer wenigstens zum Teil.

Das Federgehäuse 76 wird zu dem Ende der Anschlusseinheit 101 durch einen Deckel 77 abgeschlossen. Dort wird auch das Anschlusskabel 38 für die elektrische Spuleneinrichtung 11 herausgeführt. Vorzugsweise wird dort auch ein elektrisches Anschlusskabel für die Sensoreinrichtung 20 nach außen herausgeführt.

Die Sensoreinrichtung 20 umfasst zwei Sensorteile, nämlich den Detektorkopf 21, der in der hier weiter oben dargestellten Variante innerhalb der Positivkammer 43 der Federeinrichtung 42 angeordnet ist. Die Sensoreinrichtung 20 umfasst als weiteres Sensorteil die Maßstabeinrichtung 30, die in dieser Variante in dem Federgehäuse 76 angeordnet oder aufgenommen ist. Je nach Ausgestaltung und Materialwahl des Federgehäuses 76 und nach Messprinzip der Sensoreinrichtung 20 kann die Maßstabeinrichtung 30 in die Wandung des Federgehäuses 76 integriert sein oder aber auf der Innenwandung des Federgehäuses 76 angeordnet werden.

Möglich ist es auch, die Maßstabeinrichtung 30 in eine Längsnut auf der Außenwandung des Federgehäuses 76 einzusetzen. Das ist z. B. möglich, wenn die Sensoreinrichtung auf der Auswertung magnetischer Feldstärken beruht oder magnetische Feldstärken einsetzt und wenn das Federgehäuses 76 beispielsweise aus einem Faserverbundwerkstoff oder aus einem anderen magnetisch nicht leitenden Material besteht.

In der anderen dargestellten Variante ist die Maßstabeinrichtung 30 beispielsweise in die Kolbenstange integriert. Die Maßstabeinrichtung 30 kann z. B. in eine Nut der Kolbenstange 6 eingesetzt sein. Vorzugsweise besteht die Kolbenstange 6 aus einem magnetisch nicht oder schlecht leitenden Material.

Der Detektorkopf 21 umfasst in beiden Alternativen zwei Detektoren 22 und 23, die hier in Bewegungsrichtung 18 versetzt zueinander angeordnet sind. In der ersten Alternative ist der Detektorkopf 21 an dem Federungskolben 37 angeordnet und insbesondere daran befestigt. In der ersten Alternative sitzt der Detektorkopf 21 radial weiter außen benachbart (aber beabstandet) von der Maßstabeinrichtung 30 in dem Federgehäuse 76. In der zweiten Alternative ist der Detektorkopf 21 radial weiter innen an dem Federungskolben 37 angeordnet.

Die Maßstabeinrichtung 30 weist in jedem Fall eine sich über eine Messstrecke 31 erstreckende Struktur 32 auf, über die sich die physikalischen Eigenschaften der Maßstabeinrichtung 30 periodisch ändern.

Vorzugsweise sind auf der Maßstabeinrichtung 30 Sensorabschnitte 33 (vergleiche Figuren 4 bis 7) angeordnet, die sich jeweils wiederholende elektrische und/oder magnetische Eigenschaften haben und somit die Struktur 32 der Maßstabeinrichtung 30 bilden.

Dabei kann, wie schon in Figur 4 dargestellt, die Maßstabeinrichtung 30 eine Vielzahl von Permanentmagneten aufweisen, deren Pole alternierend angeordnet sind, sodass sich ein Nordpol und ein Südpol alternierend abwechseln.

In einer solchen Ausgestaltung ist der Detektorkopf 21 mit Detektoren 22 und 23 ausgerüstet, die ein Magnetfeld detektieren. Beispielsweise können die Detektoren 22 und 23 als elektrische Spulen ausgebildet sein oder beispielsweise als Hallsensoren ausgeführt sein, um die Intensität eines magnetischen Feldes der Permanentmagneten zu erfassen.

Findet nun eine Relativbewegung der Anschlusseinheiten 101 und 102 des Dämpfers 1 zueinander statt, so ändert sich die Position 19 des Dämpfers 1 und es verschiebt sich die relative Position des Detektorkopfs 21 relativ zu der Maßstabeinrichtung 30. Durch Auswertung der Signalstärke eines Detektors 22, 23 und insbesondere von wenigstens zwei Detektoren 22, 23 kann somit auf die relative Position des Detektorkopfs 21 relativ zu einem Sensorabschnitt 33 bzw. gegenüber der Maßstabeinrichtung 30 oder der absoluten Position innerhalb eines Sensorabschnitts 33 zurückgeschlossen werden. Werden zwei Detektoren in Bewegungsrichtung 18 versetzt zueinander angeordnet und erfassen beide Detektoren das Magnetfeld der Maßstabeinrichtung 30, so kann durch Auswertung der Signale die Position 19 und die Bewegungsrichtung 18 sehr genau ermittelt werden.

Bei der kontinuierlichen Bewegung wird in der Speichereinrichtung 45 der Steuereinrichtung 46 die Anzahl der passierten Sensorabschnitte bzw. Perioden hinterlegt, sodass auf die absolute Position 19 zurückgeschlossen werden kann. Dazu ist nur erforderlich, dass die Messfrequenz derart hoch ist, dass nicht während eines Messzyklus ein vollständiger Sensorabschnitt "unbemerkt" vorbeigeschoben wird.

Dadurch, dass die Intensität der Feldstärke ermittelt wird, kann die Auflösung der Sensoreinrichtung 20 erheblich gesteigert werden. Dabei ist es möglich, dass die Auflösung zur Bestimmung der Position 19 um einen Faktor 50, 100, 500, 1000, 2000, 4000 oder mehr kleiner ist als eine Länge 34 eines Sensorabschnitts 33. Besonders bevorzugt werden Faktoren verwendet, die einer Potenz von 2 entsprechen, beispielsweise 128, 256, 512, 1024, 2048, 4096, 8192, 16384 oder mehr. Dies erleichtert die (digitale) Signalverarbeitung. Dadurch kann bei Verwendung einer Struktur 32 mit Sensorabschnitten 33 im Millimeterbereich eine Auflösung im Mikrometerbereich erreicht werden.

Die Sensoreinrichtung 20 kann an der Maßstabeinrichtung 30 Permanentmagneten als Felderzeugungseinheiten 35 umfassen, so wie es in Figur 4 dargestellt ist. Möglich ist es aber auch, dass die Struktur 30 kein permanentes Magnetfeld erzeugt, sondern dass sich über der Länge der Struktur 32 andere physikalische und insbesondere magnetische und/oder elektrische Eigenschaften ändern.

Beispielsweise kann die Maßstabeinrichtung 30 wenigstens zum Teil aus einem ferromagnetischen Material gebildet sein, wobei die Maßstabeinrichtung 30 an dem ferromagnetischen Material beispielsweise in regelmäßigen oder vorbestimmten Abständen Zacken, Zähne, Vorsprünge, Nuten oder andere Strukturen aufweist, die zu einer Positionsbestimmung dienen können. Möglich ist es auch, dass die Maßstabeinrichtung zum Beispiel insgesamt aus einem Isolator oder Nicht-Leiter 67 besteht, in welchen in periodischen Abständen Leiter 66 eingebettet sind. Verschiedene Messprinzipien der Sensoreinrichtung 20 werden im Folgenden mit Bezug auf die Figuren 4 bis 7 erläutert.

In Figur 4 ist eine Variante der Sensoreinrichtung 20 abgebildet, bei der die Struktur 30 Permanentmagnete als Felderzeugungseinheiten 35 aufweist. Dabei sind die Pole der Felderzeugungseinheiten 35 vorzugsweise alternierend angeordnet, sodass sich über der Messstrecke 31 der Maßstabeinrichtung 30 ein sich periodisch änderndes Magnetfeld ergibt.

In Figur 4 ist der Detektorkopf 21 im Inneren des Gehäuses 76 angeordnet und die Maßstabeinrichtung 30 befindet sich integriert in das Dämpfergehäuse 2 oder Federgehäuse 76 oder ein sonstiges Gehäuse. In bestimmten Abständen sind Positionsmarken 39 oder dergleichen vorgesehen, um bestimmte Kalibrierungsstellen zur Kalibrierung der absoluten Position zur Verfügung zu stellen oder aber über bestimmte Codierungen eine absolute Positionsbestimmung zu ermöglichen. Es können in allen Fällen auch separate Endlagensensoren vorgesehen sein.

Die Maßstabeinrichtung 30 kann aus einzelnen Permanentmagneten zusammengesetzt sein oder als einzelner Magnet mit abwechselnder Magnetisierung ausgeführt sein. Bevorzugt wird als Maßstabeinrichtung 30 ein Magnetband verwendet, beispielsweise aus kunststoffgebundenem magnetischem Material.

Die Maßstabeinrichtung 30 kann insbesondere Teil des Gehäuses 2 oder 76 oder eines anderen Teils der Dämpfer 1 sein, wenn dieses zumindest zum Teil aus einem Material mit hartmagnetischen Eigenschaften besteht. In diesem Fall kann die relative, in bestimmten Ausführungen auch absolute, Positionsbestimmung durch lokal unterschiedliche Magnetisierung des Materials erfolgen.

Eine bevorzugte Ausführung sieht vor, die Maßstabeinrichtung 30 in Form einer hartmagnetischen Beschichtung auf das Gehäuse 2 oder 76 etc. aufzubringen. Dabei sind Schichtstärken von weniger als 1 Millimeter oder weniger als 100 Mikrometer und insbesondere weniger als 10 Mikrometer erreichbar und reichen zur Positionsbestimmung aus.

Figur 5 zeigt eine Variante, bei der an der Maßstabeinrichtung 30 ebenfalls in regelmäßigen Abständen Permanentmagnete 35 angeordnet sind. Zwischen den Permanentmagneten 35 ist beispielsweise jeweils ein nicht-magnetisches Material vorgesehen. Auch dadurch ergibt sich eine sich periodisch ändernde Intensität des Magnetfeldes über der Messstrecke 31 der Maßstabeinrichtung 30. Stark schematisch eingezeichnet ist ein Detektorkopf 21 mit hier ebenfalls zwei Detektoren 22, 23, wobei der Erfassungswinkel für die beiden Detektoren eingezeichnet ist, um zu verdeutlichen, dass sich bei diesem in Bewegungsrichtung 18 versetzt angeordneten Detektoren 22, 23 unterschiedliche Intensitäten bei der Messung ergeben.

Figur 6 zeigt eine andere Ausgestaltung der Sensoreinrichtung 20, wobei die strukturierte Maßstabeinrichtung 30 beispielsweise ferromagnetisch ausgebildet ist und kein oder doch im Wesentlichen kein eigenes Magnetfeld bereitstellt. Hier ist die Außenform des ferromagnetischen Teils der Maßstabeinrichtung 30 mit einer regelmäßigen Struktur versehen, wobei in regelmäßigen und/oder vorbestimmten Abständen Spitzen 65 oder Zacken oder andere Vorsprünge oder Rücksprünge vorgesehen sind. Die Länge 34 eines Sensorabschnitts 33 ergibt sich hier aus dem Abstand zweier Spitzen 65 oder Zacken oder dergleichen. Um eine glatte Oberfläche zur Verfügung zu stellen, kann der Zwischenraum zwischen den Spitzen 65 mit einer Füllmasse 64 ausgefüllt sein.

Bei dieser Variante umfasst der Detektorkopf 21 vorzugsweise wiederum zwei Magnetfeldsensoren bzw. Detektoren 22 und 23. Zusätzlich ist eine Magnetfelderzeugungseinrichtung 26 in Form von zum Beispiel eines Permanentmagnetes vorgesehen. Das Magnetfeld der Magnetfelderzeugungseinrichtung 26 wird durch die Struktur 32 der Maßstabeinrichtung 30 beeinflusst bzw. "verbogen", sodass auch hier in Abhängigkeit von der Position der einzelnen Detektoren 22 und 23 sich unterschiedliche Feldstärken des Magnetfeldes der Magnetfelderzeugungseinrichtung 26 ergeben, die von den Detektoren 22, 23 erfasst werden. Auch hier können die Detektoren 22, 23 beispielsweise als elektrische Spulen oder Hallsensoren oder dergleichen ausgeführt sein.

An dieser Stelle sei angemerkt, dass in allen Ausgestaltungen und Ausführungsbeispielen die Struktur 32 der Maßstabeinrichtung 30 über ihrer gesamten Länge nicht unbedingt gleiche Längen 34 der Sensorabschnitte 33 aufweisen muss. Möglich ist es auch, dass ein Teil der Sensorabschnitte 33 beispielsweise in einem Abschnitt 63 kürzere (oder längere) Sensorabschnitte aufweist. Möglich ist es auch, dass jeder einzelne Sensorabschnitt 33 eine unterschiedliche Länge aufweist. Unterschiedliche Längen der Sensorabschnitte 33 können beispielsweise sinnvoll sein, um in der Nähe eines Endpunktes automatisch eine höhere Auflösung zu bewirken. Umgekehrt kann in anderen Bereichen ein größerer Abstand bzw. eine größere Länge eines Sensorabschnitts 33 vorgesehen sein, um die Sensoreinrichtung 20 dort unempfindlicher auszuführen.

Eine bevorzugte Ausführung sieht vor, die Maßstabeinrichtung 30 derart zu gestalten, dass in Bewegungsrichtung 18 zwei oder mehr parallele Bahnen verlaufen, die wie einzelne Maßstäbe wirken. Dabei müssen einzelne Maßstäbe nicht über die ganze Bewegungslänge gleichförmig wirken, beispielsweise bei Verwendung als Index an den Enden. Der Detektorkopf 30 wird dann dementsprechend gestaltet und weist zumindest einen zusätzlichen Detektor 22 auf. Dabei kann durch Verwendung von zwei oder mehr Bahnen in der Maßstabeinrichtung 30 die Position des Detektorkopfs 30 auch absolut bestimmt werden: entweder durch digitale Codierung oder auch zwei Bahnen mit zueinander unterschiedlichen Längen der jeweiligen Sensorabschnitte 33, ähnlich dem Nonius bei Schieblehren.

Figur 7 zeigt noch eine Ausgestaltung einer Sensoreinrichtung 20, bei der die Maßstabeinrichtung 30 hier keine magnetischen Teile aufweist. Die Maßstabeinrichtung 30 verfügt wieder über eine Struktur 32, wobei hier in periodischen Abständen Leiter 66 in ein an sich nicht-leitendes Material bzw. ein Isolator oder Nicht-Leiter 67 eingefügt sind. Auch hier wird eine Länge 34 eines Sensorabschnitts 33 durch den Abstand zweier Leiter 66 bestimmt.

Der Detektorkopf 21 verfügt in diesem Ausführungsbeispiel über eine Magnetfelderzeugungseinrichtung 26, die dazu ausgebildet ist, ein magnetisches Wechselfeld zur Verfügung zu stellen. Weiterhin weist der Detektorkopf wenigstens einen Detektor und insbesondere wenigstens zwei Detektoren 22, 23 auf, die wiederum zur Erfassung von Magnetfeldern bzw. der Intensität von Magnetfeldern dienen.

Bei der Sensoreinrichtung 20 im Ausführungsbeispiel gemäß Figur 7 erzeugt die Magnetfelderzeugungseinrichtung 26 ein insbesondere hochfrequentes magnetisches Wechselfeld. Dadurch werden in den Leitern 66 Wirbelströme erzeugt, die in den Leitern 66 wiederum Magnetfelder induzieren, die dem erregenden Magnetfeld entgegen gerichtet sind. Dadurch wird das Magnetfeld aus den Leitern 66 verdrängt und zwischen den Leitern 66 verstärkt, sodass in der Darstellung gemäß Figur 7 der Detektor 23 ein stärkeres Signal erhält als der Detektor 22. Bei einer weiteren Relativverschiebung des Detektorkopfs 21 relativ zu der Maßstabeinrichtung 30 ändern sich positionsabhängig die magnetischen Verhältnisse, sodass über die Signale der Detektoren 22, 23 die Position 19 abgeleitet werden kann. Außerdem kann auch auf die Bewegungsrichtung 18 zurückgeschlossen werden.

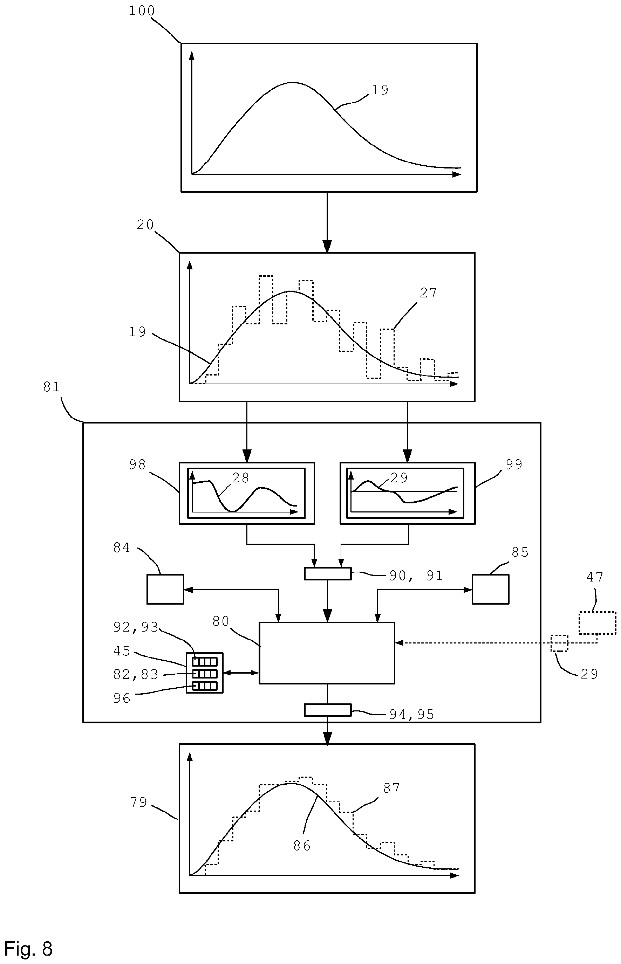

Die mittels der Sensoreinrichtung 20 ermittelten Messwerte werden gemäß dem in Figur 8 dargestellten Ablauf aufbereitet, um wenigstens einen Dämpfer 1 damit zu steuern.

Der Dämpfer 1 federt bei Stößen ein, sodass sich die Position 19 der Anschlusseinheiten 101, 102 relativ zueinander entsprechend ändert. Die Sensoreinrichtung 20 arbeitet primär als Wegsensor und leitet aus dem zeitlichen Verlauf der Position 19 einen entsprechenden Signalverlauf der Sensorsignale 27 ab. Dabei wird das Signal digitalisiert und erfährt schon dadurch ein Digitalisierungsrauschen. Weiterhin können auch andere Effekte zur Entstehung und/oder Erhöhung des Rauschens beitragen. Eine ungeeignete Filterung kann das Rauschen auch verstärken. Deshalb ist ein geeigneter Algorithmus wichtig.

Nach der Erfassung des Wegsignals als Sensorsignal 27 wird in einer Recheneinheit 98 zur Ermittlung des Geschwindigkeitssignals 28 dessen Wegsignal 27 differenziert. Zusätzlich kann in einer Recheneinheit 99 zur Ermittlung eines Beschleunigungssignals 29 entweder das Wegsignal 27 zweimal abgeleitet werden oder es wird das Geschwindigkeitssignal 28 einmal abgeleitet, um das Beschleunigungssignal 29 zu erhalten.

Das Geschwindigkeitssignal 28 und das Beschleunigungssignal 29 bilden zusammen einen Messwertdatensatz 90 bzw. beim nächsten Durchlauf einen Messwertdatensatz 91. Die Messwertdatensätze werden einer Filtereinrichtung 80 zugeführt und können direkt in einer Speichereinrichtung 45 abgelegt werden. In der Filtereinrichtung 80 werden die Messwertdatensätze 90, 91 nacheinander analysiert. Die Messwertdatensätze können auch parallel analysiert werden. In Abhängigkeit von den Werten eines Messwertdatensatzes 90 wird ein entsprechender Filterparametersatz 82 oder 83 etc. ausgewählt oder abgeleitet. Dazu kann ein Vergleich wenigstens eines Werts des Messwertdatensatzes 90 mit dem zugehörigen Grenzwert aus dem Grenzwertsatz 96 durchgeführt werden. Überschreitet der Wert des Messwertdatensatzes 90 den zugehörigen Grenzwert des Grenzwertsatzes 96, wird z. B. ein Filterparametersatz 82 ausgewählt und andernfalls ein Filterparametersatz 83. Anschließend wird über einen geeigneten Filteralgorithmus aus dem Messwertdatensatz 90 mit dem entsprechend bestimmten Filterparametersatz 82, 83 ein Steuerdatensatz 94 abgeleitet.

Es ist möglich und bevorzugt, dass bei einem Messdatensatz 91 der Filterparametersatz mit dem vorhergehenden Messdatensatz 90 bestimmt wird, da aufgrund der hohen Messfrequenz davon ausgegangen wird, dass sich von einem Messdatensatz zum nächsten Messdatensatz die Werte nicht so viel verändern, dass eine Neubestimmung eines Filterparametersatzes nötig ist.

Möglich und bevorzugt ist es aber auch, dass ein Messdatensatz 91 (oder zuvor 90) aufbereitet oder direkt und unaufbereitet in der Speichereinrichtung 45 als hinterlegter Datensatz 93 (oder zuvor 92) gespeichert wird. Mit dem nun hinterlegten Datensatz 93 kann ein Filterparametersatz 82, 83 ausgewählt werden. Mit dem Filterparametersatz kann mit dem entsprechenden Filter, beispielsweise einem Kalman-Filter 84 oder einem Mittelwertbilder 85 oder einem anderen Filteralgorithmus oder mit anderen Filtereinrichtungen ein entsprechender Steuerdatensatz 95 berechnet werden.

Nach der Berechnung des Steuerdatensatzes 95 kann iterativ überprüft werden, ob der zugehörige Filterparametersatz der richtige Filterparametersatz war. In jedem Fall oder in manchen Fällen oder bei Überschreitung gewisser Abweichungen kann eine erneute Ermittlung eines geeigneten Filterparametersatzes durchgeführt werden, um damit dann anschließend wieder den aktuellen Steuerdatensatz 95 abzuleiten. Eine solche Iteration kann einmal erfolgen oder mehrmals durchgeführt werden und kann auf eine maximale Anzahl von Durchläufen begrenzt werden.

Zusätzlich kann der Filtereinrichtung auch ein Beschleunigungssignal 29 eines separaten Beschleunigungssensors 47 zugeführt werden. Damit kann auch die Beschleunigung des Zweirades insgesamt berücksichtigt werden.

Bei der Bestimmung eines geeigneten Filterparametersatzes 82, 83 ist es möglich, dass zwei oder mehr unterschiedliche Filterparametersätze 82, 83 vorgesehen sind, wobei die Auswahl eines Filterparametersatzes 82, 83 vorzugsweise danach erfolgt, ob das Geschwindigkeitssignal eine bestimmte Größe überschreitet oder nicht. Zusätzlich kann und wird besonders bevorzugt auch das Beschleunigungssignal herangezogen, um über einen geeigneten Filterparametersatz zu entscheiden. Im Ausführungsbeispiel werden sowohl das Geschwindigkeitssignal als auch das Beschleunigungssignal zur Auswahl eines geeigneten Filterparametersatzes herangezogen.

In einfachen Fällen erfolgt eine Filterung über eine Mittelwertbildung, wobei unterschiedliche Filterparametersätze sich dadurch unterscheiden können, dass die Anzahl der berücksichtigten Messwerte variiert wird. Liegen beispielsweise kleine Geschwindigkeitssignalen und kleine Beschleunigungssignalen vor, können mehr Messwerte aus der Vergangenheit mit berücksichtigt werden als bei hohen Geschwindigkeitssignalen oder hohen Beschleunigungssignalen, da ansonsten bei hohen Geschwindigkeiten und hohen Beschleunigungen ein deutlicher und gegebenenfalls schädlicher Verzug bei der Reaktion des Dämpfers 100 auftreten kann. Umgekehrt bewirkt eine stärkere Glättung von Messwerten bei kleinen Geschwindigkeitssignalen und kleinen Beschleunigungssignalen eine stärkere Herausfilterung von Digitalisierungsrauschen, wodurch das Ansprechverhalten auch bei kleinen und kleinsten Stößen sauber bleibt.

Zum Abschluss ist in Figur 8 unten ein Diagramm 79 dargestellt bei dem die reale Geschwindigkeit 86 und die zur Steuerung verwendete Geschwindigkeit 87 schematisch aufgetragen sind. Durch die Analyse der Messwerte und entsprechende Berücksichtigung eines Filterparametersatzes sind die Abweichungen zwischen den Kurven gering.

Besonders bevorzugt wird in allen Ausgestaltungen ein Kalman-Filter eingesetzt. Die Filterparametersatz wird bei dem bevorzugten Kalman-Filter wie folgt bestimmt:
Der Filteralgorithmus bekommt hier die (verrauschte) gemessene Geschwindigkeit "Vr" und die (verrauschte) gemessene Beschleunigung "Ar" der Anschlusseinheiten zueinander übergeben.

Die Werte für Vr und Ar werden von der Sensoreinrichtung 20 gemessen bzw. daraus abgeleitet. Das Geschwindigkeitssignal und das Beschleunigungssignal können aus dem Sensorsignal abgeleitet werden. Das Beschleunigungssignal kann auch über einen separaten Beschleunigungssensor 47 direkt ermittelt werden.

Mit dem Kalman-Filter werden daraus die geschätzte bzw. abgeleitete Geschwindigkeit "Vg" (Bezugszeichen 87) und gegebenenfalls die geschätzte Beschleunigung "Ag" der Relativbewegung der Anschlusseinheiten bestimmt. Hier werden die Werte Vr und Ar in SI-Einheiten und folglich in "m/s" bzw. in "m/s2" angegeben.

Zunächst werden Variablen "Q0" und "R" und "Vg" und "P" definiert. Beim ersten Durchlauf des Filteralgorithmus werden Startwerte definiert, hier werden vorzugsweise Q0=0,01 und R=5 und Vg=0 und P=1 gesetzt. Vg entspricht der geschätzten bzw. abgeleiteten Geschwindigkeit 87 der Relativbewegung der Anschlusseinheiten zueinander, die für die Bestimmung der Dämpfung verwendet wird.

Anschließend werden bei jedem Durchlauf der Filterparametersatz bestimmt und es werden Werte für Q, Pp, K, Vg und P bestimmt. Die Parameter des Filterparametersatzes 82, 83 hängen von den gemessenen (verrauschten) Werten ab. Dazu wird unterschieden, ob der mathematische Betrag der (verrauscht) gemessenen Beschleunigung "Ar" größer als ein vorgegebener Schwellwert, hier vorzugsweise 5, beträgt. Die im vorherigen Durchlauf geschätzte bzw. abgeleitete Geschwindigkeit "Vg" (aus dem hinterlegten Datensatz 92) wird als Wert Vp definiert durch Vp=Vg (aus der letzten Schleife).

Außerdem wird bestimmt, ob der mathematische Betrag des Wertes Vp (geschätzte Geschwindigkeit Vg der Relativbewegung der Anschlusseinheiten zueinander im letzten Durchlauf) größer als ein weiterer Schwellwert, hier vorzugsweise 0,1 beträgt.

Falls auch nur eine der Bedingungen zutrifft wird der Parameter "Q" auf einen vordefinierten Wert, hier Q=2, gesetzt. Falls keine Bedingung zutrifft, wird Q auf einen anderen vordefinierten Wert, nämlich hier Q=Q0 und somit Q=0,01 gesetzt.

Danach werden Werte Pp, K, Vg und P ermittelt zu

$$Pp = P+Q.$$

$$K = Pp * 1/(Pp + R)$$

$$Vg = Vp + K * (Vr - Vp)$$

$$P = (1 - K) * Pp$$

ermittelt.

Als Ergebnis des Filteralgorithmus bzw. der Filterfunktion wird eine geschätzte Geschwindigkeit "Vg" (Bezugszeichen 87 in Fig. 8) zurückgegeben. Es kann auch eine geschätzte Beschleunigung "Ag" ermittelt und zurückgegeben werden. Die Filterparameter und berechneten Werte werden wenigstens bis zum nächsten Durchgang als Filterparametersatz 83 gespeichert. Beim nächsten Durchlauf wird der Filterparametersatz 83 zum Filterparametersatz 82.

Die Geschwindigkeit 87 wird dann zur Steuerung verwendet.

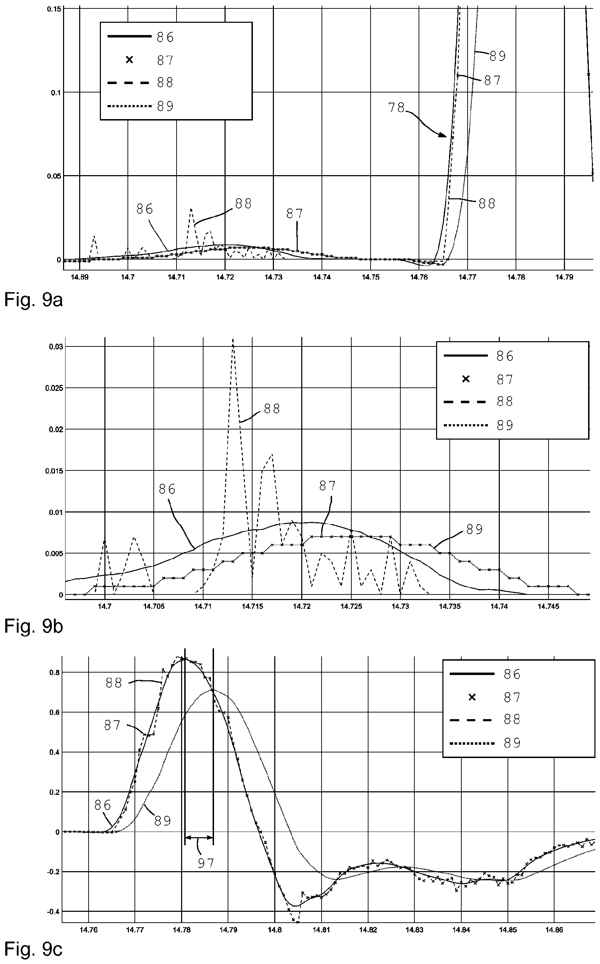

In den Figuren 9a bis 9c sind schließlich reale Werte aufgetragen, die mit dem Dämpfer gemäß Figur 4 aufgezeichnet wurden.

Dabei zeigt Figur 9a den zeitlichen Ablauf über etwas mehr als eine Zehntelsekunde, innerhalb der zunächst nur sehr kleine Geschwindigkeiten vorliegen, während gegen Ende des abgebildeten Zeitraums ein größerer Stoß erfolgt.

Durchgezogen eingezeichnet ist die reale Geschwindigkeit 86, die auch über zusätzliche Sensoren erfasst wurde und die nach der Messung nachträglich aufwendig ermittelt wurde. Im normalen Fahrbetrieb steht die reale Geschwindigkeit 86 in der Messqualität zur Steuerung nicht zur Verfügung. Die reale Geschwindigkeit 86 ist hier nur zum Vergleich abgebildet.

Die gestrichelte Linie 88 zeigt die mit einem ersten Filterparametersatz 82 gefilterte Geschwindigkeit 88, die zu Beginn des dargestellten Messzeitraums erheblich von der realen Geschwindigkeit 86 abweicht.

Die punktierte Linie 89 zeigt den Geschwindigkeitsverlauf, der mit einem zweiten Filterparametersatz 83 mit stärkerer Filterung ermittelt wurde. Zu Beginn des Messzeitraumes zeigt die Kurve 89 einen erheblich glatteren Verlauf als die gestrichelt dargestellte Kurve 88. Die Abweichungen von dem Verlauf der realen Geschwindigkeit 86 sind relativ gering. Erkennbar ist zwar ein leichter Zeitversatz, aber dieser spielt bei diesen kleinen Stößen keine Rolle.

Mit dem mit Beginn eines stärkeren Stoßes bei etwa 14,76 Sekunden steigt der Verlauf der realen Geschwindigkeit 86 sehr steil an. Die gestrichelte Kurve 88 folgt dem realen Geschwindigkeitsverlauf 86 praktisch verzögerungsfrei, während die punktierte Linie 89 einen deutlichen Zeitversatz aufweist.

Durch die Kriterien der Analyse der Messwerte wird hier bei der Verarbeitung der Messwerte eine Umschaltung der Filterparametersätze vorgenommen, wobei bis etwa 14,765 Sekunden für die Steuerung der punktierte Kurvenverlauf 89 genommen wird und bei dem ab etwa 14,765 Sekunden von der Kurve 89 auf die Kurve 88 umgeschaltet wird. Der Umschaltzeitpunkt 78 ist eingezeichnet. Zu diesem Zeitpunkt hat die gemessene Geschwindigkeit und/oder die gemessene Beschleunigung ein vorbestimmtes Maß überschritten, sodass ein anderer Filterparametersatz ausgewählt wird. In allen Fällen sind auch mehr als zwei Filterparametersätze möglich, beispielsweise einen mit geringerer, einen mit mittlerer und einen mit stärkerer Filterung oder Glättung.

Mit den eingezeichneten Kreuzen 87 wird der Steuerungsverlauf abgebildet, wobei die Kreuze 87 zunächst auf der Kurve 89 (stärkere Glättung) und später auf der Kurve 88 (schwächere Glättung) liegen. So kann über den gesamten Messbereich eine ausreichende Übereinstimmung und hohe Genauigkeit erzielt werden.

In besonders einfachen Fällen kann z. B. eine stärkere Glättung eine einfache Mittelung der letzten fünf oder zehn Messwerte umfassen, während bei einer schwächeren Glättung nur die letzten zwei oder drei Werte gemittelt werden. Dabei kann die Stärke der Gewichtung von dem zeitlichen Abstand abhängen (Gewichtung zum Beispiel 25%, 50 und 100% für den vorletzten Messwert, den letzten Messwert und den aktuellen Wert).

Figur 9b zeigt den ersten Zeitabschnitt aus Figur 9 vergrößert, sodass die Abweichungen der Kurve 88 von dem realen Geschwindigkeitsverlauf 86 sehr deutlich sichtbar sind. Zum Zeitpunkt von etwa 14,713 Sekunden wird bei der Kurve 88 ein Geschwindigkeitswert ausgegeben, der viermal so groß ist wie der tatsächlich real vorhandene Geschwindigkeitswert. Zu diesem Zeitpunkt ist eine Abweichung bei der Kurve 89 von der realen Geschwindigkeit 86 sehr viel geringer.

Figur 9c zeigt den Verlauf des stärkeren Stoßes am Ende des in Figur 9a dargestellten Zeitraums, wobei hier eine gute Übereinstimmung der Kurvenverläufe 88 und des realen Geschwindigkeitsverlaufs 86 erkennbar ist. Der Zeitversatz 97 zwischen dem Maximum des realen Geschwindigkeitsverlaufs 86 und dem Maximum der Kurve 89 beträgt weit mehr als 5 ms und ist für derartige Stöße zu groß, um optimale Dämpfungseigenschaften zur Verfügung zu stellen.

Insgesamt liefert die Erfindung durch eine Sensoreinrichtung 20 mit hoher Messauflösung und durch die Filterung der Messdaten, wobei die Filterparameter in Abhängigkeit von den Messdaten ausgewählt werden, in allen Leistungsbereichen der Dämpfer 1 ein ausreichend schnelles und glattes und jeweils angepasstes Ansprechverhalten und somit eine verbesserte Dämpfereinrichtung 100. Die Steuerung in Echtzeit kann erheblich verbessert werden, da die Qualität der verwendeten (Mess-)Signale verbessert wird, wodurch ein in manchen Situationen bislang bemerkbarer rauer Einfedervorgang beim Dämpfen erheblich reduziert und praktisch beseitigt werden kann.

**Bezugszeichenliste:**

| | | | |
|---|---|---|---|
| 1 | Dämpfer | 6 | Kolbenstange |
| 2 | Dämpfergehäuse | 7 | Dämpfungskanal, Strö-mungskanal |
| 3 | erste Dämpferkammer | | |
| 4 | zweite Dämpferkammer | 8 | Dämpfungsventil |
| 5 | Dämpfungskolben | 10 | Dämpferkennlinie |
| 11 | elektrische Spuleneinrichtung | 64 | Füllmasse |
| | | 65 | Spitze |
| 12 | Steuerkreislauf | 66 | Leiter |
| 18 | Bewegungsrichtung | 67 | Isolator |
| 19 | Position | 70 | Schritt |
| 20 | Sensoreinrichtung | 71 | Ausgleichsraum |
| 21 | Detektorkopf | 72 | Ausgleichskolben |
| 22, 23 | Detektor | 76 | Federgehäuse |
| 26 | Magnetfelderzeugungs-einrichtung | 77 | Deckel |
| | | 78 | Umschaltpunkt |
| 27 | Sensorsignal | 79 | Diagramm |
| 28 | Geschwindigkeitssignal | 80 | Filtereinrichtung |
| 29 | Beschleunigungssignal | 81 | Analyseeinrichtung |
| 30 | Maßstabeinrichtung | 82, 83 | Filterparametersatz |
| 31 | Messstrecke | 84 | Kalman-Filter |
| 32 | Struktur | 85 | Mittelwertbilder |
| 33 | Sensorabschnitt | 86 | reale Geschwindigkeit |
| 34 | Länge | 87 | verwendete Geschwin-digkeit |
| 35 | Felderzeugungseinheit | | |
| 36 | Ringleiter | 88, 89 | Geschwindigkeit |
| 37 | Federungskolben | 90, 91 | Messdatensatz |
| 38 | Kabel | 92, 93 | hinterlegter Datensatz |
| 39 | Positionsmarke | 94, 95 | Steuerdatensatz |
| 42 | Federeinrichtung | 96 | Grenzwertsatz |
| 43 | Positivkammer | 97 | Zeitversatz |
| 44 | Negativkammer | 98, 99 | Recheneinheit |
| 45 | Speichereinrichtung | 100 | Dämpfereinrichtung |
| 46 | Steuereinrichtung | 101 | Anschlusseinheit |
| 47 | Beschleunigungssensor | 102 | Anschlusseinheit |
| 49 | Display, Anzeige | 103 | Dämpferhub |
| 50 | Dämpferkennlinie | 111 | Rad, Vorderrad |
| 52 | Schritt | 112 | Rad, Hinterrad |
| 53 | Internet | 113 | Rahmen |
| 54 | Netzwerkschnittstelle | 114 | Federgabel |
| 55 | Funknetzschnittstelle | 115 | Hinterraddämpfer |
| 56 | Schritt | 116 | Lenker |
| 57 | Touchscreen, grafische Bedieneinheit | 117 | Sattel |
| | | 150 | Bedieneinrichtung |
| 58 | Halter | 151 | Betätigungseinrichtung |
| 60 | Steuereinrichtung | 152 | Einstelleinrichtung |
| 61 | Batterieeinheit | 160 | Smartphone |
| 63 | Abschnitt | 200 | Zweirad |

**Patentansprüche**

1. Verfahren zur Steuerung der Dämpfung einer Relativbewegung von zwei relativ zueinander bewegbaren Anschlusseinheiten (101, 102), zwischen denen zur Dämpfung der Relativbewegungen wenigstens ein steuerbarer Dämpfer (1) mit einem Dämpfungsventil (8) mit einem magnetorheologischen Fluid vorgesehen ist, wobei dem wenigstens einen Dämpfungsventil (8) wenigstens eine Magnetfelderzeugungseinrichtung (11) zur Erzeugung und Steuerung eines Magnetfeldes zugeordnet ist, und wobei Messdatensätze (90, 91) wenigstens über eine Relativbewegung der Anschlusseinheiten (101, 102) zueinander erfasst und mit einer Filtereinrichtung (80) aufbereitet werden,

   **dadurch gekennzeichnet,**
   **dass** wenigstens ein aus einem erfassten Messdatensatz (90, 91) abgeleiteter Datensatz (92, 93) in der Speichereinrichtung (45) hinterlegt wird, und dass der abgeleitete Datensatz (92, 93) ein Geschwindigkeitssignal (28) und/oder ein Beschleunigungssignal (29) für eine Relativbewegung der Anschlusseinheiten (101, 102) umfasst, und dass wenigstens ein hinterlegter Datensatz (92, 93) analysiert wird und in Abhängigkeit von dem Ergebnis der Analyse ein Filterparametersatz (82, 83) bestimmt wird, und dass die Steuereinrichtung (46) dazu ausgebildet ist, bei betragsmäßig geringen Geschwindigkeitssignalen und Beschleunigungssignalen (29) einen Filterparametersatz mit stärkerer Filterung
   und bei betragsmäßig größeren Geschwindigkeitssignalen oder Beschleunigungssignalen (29) einen Filterparametersatz mit geringerer Filterung auszuwählen,
   und mit dem ausgewählten Filterparametersatz (82, 83) aus dem Messdatensatz (90, 91) ein Steuerdatensatz (94, 95) abgeleitet wird, und dass die Steuereinrichtung (46) mit dem Steuerdatensatz (94, 95) die Dämpfereinrichtung (100) wenigstens teilweise steuert.

2. Verfahren nach dem vorhergehenden Anspruch, wobei aus dem Messdatensatz (90, 91) Beschleunigungsdaten (29) abgeleitet werden.

3. Verfahren nach einem der beiden vorhergehenden Ansprüche, wobei aus dem Messdatensatz (90, 91) Geschwindigkeitsdaten (28) abgeleitet werden.

4. Verfahren nach einem der drei vorhergehenden Ansprüche, wobei ein Messdatensatz (90, 91) stärker gefiltert wird, wenn der Betrag der Werte des Messdatensatzes (90, 91) kleiner ist als wenn der Betrag der Werte des Messdatensatzes (90, 91) größer ist.

5. Verfahren nach dem vorhergehenden Anspruch, wobei bei geringen Geschwindigkeiten stärker gefiltert wird als bei hohen Geschwindigkeiten.

6. Verfahren nach einem der beiden vorhergehenden Ansprüche, wobei bei geringen Beschleunigungen stärker gefiltert wird als bei hohen Beschleunigungen.

7. Verfahren nach einem der sechs vorhergehenden Ansprüche, wobei mehrere nacheinander erfasste Datensätze (90, 91) gespeichert werden.

8. Verfahren nach einem der sieben vorhergehenden Ansprüche, wobei der Steuerdatensatz 94, 95) über eine Glättung mehrerer Datensätze (92, 93) ermittelt wird.

9. Verfahren nach einem der acht vorhergehenden Ansprüche, wobei eine Stärke der Glättung von dem hinterlegten Datensatz (90, 91) abhängt.

10. Verfahren nach einem der neun vorhergehenden Ansprüche, wobei die Sensoreinrichtung (20) Messdatensätze (90, 91) mit einer Messfrequenz größer 1 kHz erfasst und/oder wobei die Steuereinrichtung (46) Steuerdatensätze (90, 91) mit einer Steuerfrequenz größer 1 kHz ermittelt und den Dämpfereinrichtung (100) wenigstens zeitweise mit wenigstens dieser Steuerfrequenz ansteuert.

11. Verfahren nach dem vorhergehenden Anspruch, wobei die Messfrequenz und/oder die Steuerfrequenz größer als 5 kHz beträgt.

12. Verfahren nach einem der beiden vorhergehenden Ansprüche, wobei die Sensoreinrichtung (20) Wegsignale mit einer Auflösung kleiner 100 $\mu$m oder kleiner 50 $\mu$m erfasst.

13. Verfahren nach einem der drei vorhergehenden Ansprüche, wobei die Messfrequenz und die Steuerfrequenz wenigstens zeitweise größer als 8 kHz und die Auflösung der Wegsignale wenigstens zeitweise kleiner als 5 $\mu$m beträgt.

14. Verfahren nach einem der vier vorhergehenden Ansprüche, wobei die Messfrequenz kleiner als 50 kHz oder kleiner als 20 kHz beträgt.

15. Verfahren nach einem der vorhergehenden Ansprüche, wobei eine Mehrzahl an Filterparametersätzen (82, 83) hinterlegt wird, und wobei in Abhängigkeit von dem wenigstens einen hinterlegten Datensatz (92, 93) ein Filterparametersatz (82, 83) ausgewählt wird.

## Claims

1. Method for controlling the damping of a relative motion of two connecting units (101, 102) which are movable relative to one another, between which at least one controllable damper (1) with a damping valve (8) comprising a magnetorheological fluid is provided for damping the relative motions, wherein at least one magnetic field generating device (11) is assigned to the at least one damping valve (8) for generating and controlling a magnetic field, and wherein measurement data sets (90, 91) are captured at least by way of a relative motion of the connecting units (101, 102) to one another and processed by means of a filtering device (80),

   **characterized in**
   **that** at least one data set (92) that is derived from a captured measurement data set (90, 91) is stored in the memory device (45), and that the derived data set (92, 93) comprises a speed signal (28) and/or an acceleration signal (29) for a relative motion of the connecting units (101, 102), and that at least one stored data set (92, 93) is analyzed and a filter parameter set (82, 83) is determined in dependence on the analysis result, and that, in the case of low value speed signals and acceleration signals (29), the control device (46) is configured to select a filter parameter set showing stronger filtering,
   and in the case of higher value speed signals or acceleration signals (29), a filter parameter set showing weaker filtering,
   and a control data set (94, 95) is derived from the measurement data set (90, 91) by means of the selected filter parameter set (82, 83), and that the control device (46) controls the damper device (100) at least partially by means of the control data set (94, 95).

2. The method according to the preceding claim, wherein acceleration data (29) are derived from the measurement data set (90, 91).

3. The method according to any of the two preceding claims, wherein speed data (28) are derived from the measurement data set (90, 91).

4. The method according to any of the three preceding claims, wherein a measurement data set (90, 91) is filtered more strongly if the amount of the values of the measurement data set (90, 91) is smaller, than if the amount of the values of the measurement data set (90, 91) is larger.

5. The method according to the preceding claim, wherein filtering is stronger with low speeds than with high speeds.

6. The method according to any of the two preceding claims, wherein filtering is stronger with low accelerations than with high accelerations.

7. The method according to any of the six preceding claims, wherein multiple data sets (90, 91) captured successively are stored.

8. The method according to any of the seven preceding claims, wherein the control data set (94, 95) is obtained by way of smoothing multiple data sets (92, 93).

9. The method according to any of the eight preceding claims, wherein the strength of smoothing depends on the stored data set (90, 91).

10. The method according to any of the nine preceding claims, wherein the sensor device (20) captures measurement data sets (90, 91) at a measuring frequency higher than 1 kHz, and/or wherein the control device (46) obtains control data sets (90, 91) at a control frequency higher than 1 kHz, and controls the damper device (100) at least temporarily at least at this control frequency.

11. The method according to the preceding claim, wherein the measuring frequency and/or the control frequency is higher than 5 kHz.

12. The method according to any of the two preceding claims, wherein the sensor device (20) captures displacement signals at a resolution of less than 100 $\mu$m or less than 50 $\mu$m.

13. The method according to any of the three preceding claims, wherein the measuring frequency and the control frequency are at least temporarily higher than 8 kHz, and the resolution of the displacement signals is at least temporarily smaller than 5 $\mu$m.

14. The method according to any of the four preceding claims, wherein the measuring frequency is smaller than 50 kHz or smaller than 20 kHz.

15. The method according to any of the preceding claims, wherein a plurality of filter parameter sets (82, 83) is stored, and wherein a filter parameter set (82, 83) is selected in dependence on the at least one stored data set (92, 93).

**Revendications**

1. Procédé de commande de l'amortissement d'un mouvement relatif de deux unités de raccordement (101, 102) mobiles l'une par rapport à l'autre, entre lesquelles au moins un amortisseur (1) pilotable doté d'une soupape d'amortissement (8) à fluide magnéto-rhéologique est prévu pour amortir les mouvements relatifs, au moins un dispositif de génération de champ magnétique (11) étant associé à ladite une soupape d'amortissement (8) pour générer et commander un champ magnétique, et des ensembles de données de mesure (90, 91) étant recueillis au moins par le biais d'un mouvement relatif des unités de raccordement (101, 102) les unes par rapport aux autres, et traités à l'aide d'un dispositif de filtrage (80),

   **caractérisé en ce**
   **qu'**au moins un ensemble de données déduit (92, 93) d'un ensemble de données de mesure recueilli (90, 91) est mémorisé dans le dispositif d'enregistrement (45), et que ledit ensemble de données (92, 93) déduites comprend un signal de vitesse (28) et/ou un signal d'accélération (29) pour un mouvement relatif des unités de raccordement (101, 102), et qu'au moins un ensemble de données (92, 93) mémorisées est analysé, et un ensemble de paramètres de filtrage (82, 83) est déterminé en fonction du résultat de l'analyse,
   et **que** le dispositif de commande (46) est conçu pour sélectionner un ensemble de paramètres de filtrage à filtrage plus important lorsque les signaux de vitesse et les signaux d'accélération (29) ont des valeurs réduites, et un ensemble de paramètres de filtrage à filtrage moins important lorsque les signaux de vitesse ou les signaux d'accélération (29) ont des valeurs plus élevées,
   et ledit ensemble de paramètres de filtrage (82, 83) sélectionné à partir de l'ensemble de données de mesure (90, 91) permettant de déduire un ensemble de données de commande (94, 95), et que le dispositif de commande (46) commande au moins partiellement le dispositif d'amortissement (100) avec l'ensemble de données de commande (94, 95).

2. Procédé selon la revendication précédente, des données d'accélération (29) étant déduites de l'ensemble de données de mesure (90, 91).

3. Procédé selon l'une quelconque des deux revendications précédentes, des données de vitesse (28) étant déduites des ensembles de données de mesure (90, 91).

4. Procédé selon l'une quelconque des trois revendications précédentes, un ensemble de données de mesure (90, 91) étant plus fortement filtré lorsque le montant des valeurs de l'ensemble de données de mesure (90, 91) est plus bas que lorsque le montant des valeurs de l'ensemble de données de mesure (90, 91) est plus élevé.

5. Procédé selon la revendication précédente, le filtrage étant plus important à des vitesses réduites qu'à des vitesses élevées.

**6.** Procédé selon l'une quelconque des deux revendications précédentes, le filtrage étant plus important à des accélérations réduites qu'à des accélérations élevées.

**7.** Procédé selon l'une quelconque des six revendications précédentes, plusieurs ensembles de données (90, 91) recueillis successivement l'un après l'autre étant enregistrés.

**8.** Procédé selon l'une quelconque des sept revendications précédentes, l'ensemble des données de commande (94, 95) étant déterminé par le biais d'un lissage de plusieurs ensembles de données (92, 93).

**9.** Procédé selon l'une quelconque des huit revendications précédentes, une importance du lissage dépendant de l'ensemble de données (90, 91) mémorisé.

**10.** Procédé selon l'une quelconque des neuf revendications précédentes, le capteur (20) détectant des ensembles de données de mesure (90, 91) à une fréquence de mesure supérieure à 1 kHz et/ou le dispositif de commande (46) déterminant des ensembles de données de commande (90, 91) à une fréquence de commande supérieure à 1 kHz et pilotant le dispositif d'amortissement (100) au moins temporairement à au moins cette fréquence de commande.

**11.** Procédé selon la revendication précédente, la fréquence de mesure et/ou la fréquence de commande étant supérieures à 5 kHz.

**12.** Procédé selon l'une quelconque des deux revendications précédentes, le capteur (20) détectant des signaux de déplacement à une résolution inférieure à 100 $\mu$m ou inférieure à 50 $\mu$m.

**13.** Procédé selon l'une quelconque des trois revendications précédentes, la fréquence de mesure et la fréquence de commande étant au moins temporairement supérieures à 8 kHz et la résolution des signaux de déplacement au moins temporairement inférieure à 5 $\mu$m.

**14.** Procédé selon l'une quelconque des quatre revendications précédentes, la fréquence de mesure étant inférieure à 50 kHz ou inférieure à 20 kHz.

**15.** Procédé selon l'une quelconque des revendications précédentes, une pluralité d'ensembles de paramètres de filtrage (82, 83) étant mémorisée, et un ensemble de paramètres de filtrage (82, 83) étant sélectionné en fonction dudit au moins un ensemble de données (92, 93) mémorisé.

Fig. 1

Fig. 2

Fig. 3

Fig. 4

Fig. 5

Fig. 6

Fig. 7

Fig. 8

Fig. 9a

Fig. 9b

Fig. 9c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012012535 A1